# EUROPEAN PATENT APPLICATION

(11) **EP 3 363 804 A1**
(43) Date of publication of application: **22.08.2018**
(21) Application number: 17156857.9
(22) Date of filing: 20.02.2017
(51) Int. Cl.: C07F 7/10, B60C 1/00, C08C 19/25, C08C 19/44, C08F 4/42, C08L 15/00

(54) **METALLATED BENZYLSILANES AND THEIR USE AS POLYMERIZATION INITIATORS**

(71) Applicant: Trinseo Europe GmbH, 8810 Horgen (CH)
(72) Inventor: Döring, Christian, 04420 Markranstädt (DE); Rössle, Michael, 06217 Merseburg (DE); Heidenreich, Daniel, 06110 Halle (DE)
(74) Representative: Hoffmann Eitle

(57) **Abstract**

The invention relates to novel compounds useful as polymerization initiators or precursors for polymerization initiators. The invention further relates to a method of making the polymerization initiators and resulting polymers. The invention also relates to polymer compositions comprising the polymer of the invention and further components such as extender oils, fillers, vulcanizing agents etc., and to corresponding vulcanized polymer compositions and articles comprising vulcanized parts made from the vulcanized polymer composition.

## Description

### FIELD OF THE INVENTION

This invention relates to novel metallated benzylsilane compounds, precursors thereof, and the use of the metallated benzylsilane compounds as initiators in anionic polymerization of conjugated dienes. The invention also relates to polymers, including modified (chain end- or backbone-modified) polymers, prepared with the novel polymerization initiators, and to polymer compositions comprising the polymer of the invention. The invention furthermore relates to the use of such compositions in the preparation of vulcanized compositions and articles prepared from the same. The polymers and compositions of the invention have beneficial properties especially when applied to the manufacturing of tires, as reflected by improved rolling resistance, while maintaining or also improving other properties including wet grip, abrasion resistance and tensile strength.

### BACKGROUND OF THE INVENTION

Key characteristics of a tire tread include rolling resistance, wet grip and abrasion resistance. When elastomers such as polybutadiene or styrene-butadiene-copolymers, having a relatively low glass transition temperature, are used in a tire tread compound, reduced abrasion resistance and rolling resistance are observed whereas wet grip is deteriorated. In contrast, the use of an elastomer having a relatively high glass transition temperature in a tire tread compound results in improved wet grip, whereas abrasion resistance and rolling resistance are negatively affected.

A general approach to obtain fuel-efficient tires is based on the production of rubber formulations which have reduced hysteresis loss. A major source of hysteresis in vulcanized elastomeric polymers is attributed to free polymer chain ends, i.e. the section of the elastomeric polymer chain between the last crosslink and the end of the polymer chain. This free end of the polymer does not participate in the efficient elastically recoverable process and, as a result, energy transmitted to this section of the polymer is lost. This dissipated energy leads to a pronounced hysteresis under dynamic deformation. Another source of hysteresis in vulcanized elastomeric polymers is attributed to an insufficient distribution of filler particles in the vulcanized elastomeric polymer composition.

Polar groups attached to the end of a polymer chain, e.g. amines, are known to increase the interaction with fillers such as carbon black and contribute to an improved filler dispersion and therefore a reduced hysteresis loss.

The end-modification of an anionically polymerized elastomer by a functional group applying a suitable initiator is very challenging. Due to the very high sensitivity of the anionic polymerization, especially against protic agents or specific functional groups, the selection of a compound as an initiator is very limited. In addition, a functional group-containing initiator for an anionic polymerization process should have a beneficial impact on the properties of filled rubber compositions.

WO 2012/091753 describes a process for the manufacture of an aminosilane-functionalized polymer, *inter alia* comprising the steps of (1) initiating polymerization of an anionically polymerizable monomer by using an initiator comprising the reaction product of a metallating agent and a specific aminosilane compound, and (2) attaching a functional terminator to the polymer chain, so that the polymer includes an aminosilane group at its head and a functional group, provided by the functional terminator, at its tail.

In view of the above, there is a need for polymerization initiators that help to introduce polar groups to the polymer chain end, providing polymers for rubber compounds (polymer compositions) and associated rubber products (articles) with improved properties.

### SUMMARY OF THE INVENTION

In a first aspect, the present invention provides a compound of the following Formula 2: 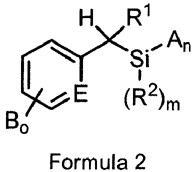 wherein
R¹ is selected from hydrogen, (C₁-C₈) alkyl and (C₆-C₁₈) aryl;
R² is selected from hydrogen, (C₁-C₁₈) alkyl, (C₆-C₁₈) aryl and (C₇-C₁₈) alkylaryl;
A is independently selected from amines having the following structural formulas: 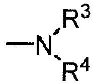
wherein R³ and R⁴ are independently selected from (C₂-C₁₈) alkyl, allyl, (C₆-C₁₈) aryl and (C₇-C₁₈) alkylaryl; and 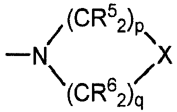
wherein R⁵ and R⁶ are independently selected from H and (C₁-C₄) alkyl; X is selected from a single bond, -N(R⁷)-, -O- and -S-, wherein R⁷ is selected from (C₁-C₈) alkyl and (C₆-C₁₈) aryl; and p and q are each independently an integer selected from 1, 2, 3 and 4;
B is independently selected from -OR⁸, -NR⁹₂, -SR¹⁰, -SiR¹¹R¹²R¹³ and -R¹⁴, wherein R⁸, R⁹, R¹⁰, R¹¹, R¹², R¹³ and R¹⁴ are independently selected from (C₁-C₁₀) alkyl;
E is =N- or =C(R¹⁵)-, wherein R¹⁵ is selected from H, (C₁-C₁₀) alkyl, -OR¹⁶, -NR¹⁷₂, -SR¹⁸, and -SiR¹⁹R²⁰R²¹, wherein R¹⁶, R¹⁷, R¹⁸, R¹⁹, R²⁰ and R²¹ are independently selected from (C₁-C₁₀) alkyl;
n is an integer selected from 1, 2 and 3, m is an integer selected from 0, 1, and 2 and m + n = 3; and
o is an integer selected from 0, 1, 2 and 3.

The compounds of Formula 2 are useful as precursors for polymerization initiators to be used in anionic polymerization.

In a second aspect, the present invention provides a polymerization initiator of the following Formula 1: 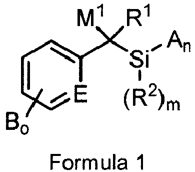 wherein
M¹ is selected from lithium, sodium and potassium;
R¹ is selected from hydrogen, (C₁-C₈) alkyl and (C₆-C₁₈) aryl;
R² is selected from hydrogen, (C₁-C₁₈) alkyl, (C₆-C₁₈) aryl and (C₇-C₁₈) alkylaryl;
A is independently selected from amines having the following structural formulas: 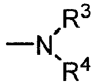
wherein R³ and R⁴ are independently selected from (C₂-C₁₈) alkyl, allyl, (C₆-C₁₈) aryl and (C₇-C₁₈) alkylaryl; and 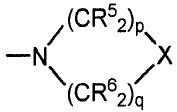
wherein R⁵ and R⁶ are independently selected from H and (C₁-C₄) alkyl; X is selected from a single bond, -N(R⁷)-, -O- and -S-, wherein R⁷ is selected from (C₁-C₈) alkyl and (C₆-C₁₈) aryl; and p and q are each independently an integer selected from 1, 2, 3 and 4;
B is independently selected from -OR⁸, -NR⁹₂, -SR¹⁰, -SiR¹¹R¹²R¹³ and -R¹⁴, wherein R⁸, R⁹, R¹⁰, R¹¹, R¹², R¹³ and R¹⁴ are independently selected from (C₁-C₁₀) alkyl;
E is =N- or =C(R¹⁵)-, wherein R¹⁵ is selected from H, (C₁-C₁₀) alkyl, -OR¹⁶, -NR¹⁷₂, -SR¹⁸, and -SiR¹⁹R²⁰R²¹, wherein R¹⁶, R¹⁷, R¹⁸, R¹⁹, R²⁰ and R²¹ are independently selected from (C₁-C₁₀) alkyl;
n is an integer selected from 1, 2 and 3, m is an integer selected from 0, 1, and 2 and m + n = 3; and
o is an integer selected from 0, 1, 2 and 3.

In a third aspect, the present invention provides a method of making the polymerization initiator of Formula 1 as defined in the second aspect of the invention and further below, comprising the step of reacting a compound of Formula 2 as defined in the first aspect of the invention and further below with a compound of the following Formula 3:

R¹⁶M¹ Formula 3

wherein M¹ is selected from lithium, sodium and potassium and R¹⁶ is selected from (C₁-C₁₈) alkyl, phenyl and benzyl.

In a fourth aspect, the present invention provides a method of making an elastomeric polymer, comprising the step of polymerizing one or more polymerizable conjugated diene compounds and optionally one or more polymerizable aromatic vinyl compounds in the presence of a polymerization initiator of the following Formula 4: 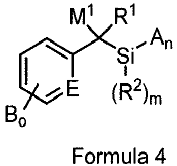 wherein
M¹ is selected from lithium, sodium and potassium;
R¹ is selected from hydrogen, (C₁-C₈) alkyl and (C₆-C₁₈) aryl;
R² is selected from hydrogen, (C₁-C₁₈) alkyl, (C₆-C₁₈) aryl and (C₇-C₁₈) alkylaryl;
A is independently selected from amines having the following structural formulas: 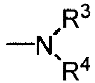
wherein R³ and R⁴ are independently selected from (C₁-C₁₈) alkyl, allyl, (C₆-C₁₈) aryl and (C₇-C₁₈) alkylaryl; and 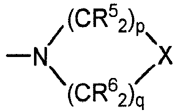
wherein R⁵ and R⁶ are independently selected from H and (C₁-C₄) alkyl; X is selected from a single bond, -N(R⁷)-, -O- and -S-, wherein R⁷ is selected from (C₁-C₈) alkyl and (C₆-C₁₈) aryl; and p and q are each independently an integer selected from 1, 2, 3 and 4;
B is independently selected from -OR⁸, -NR⁹₂, -SR¹⁰, -SiR¹¹R¹²R¹³ and R¹⁴, wherein R⁸, R⁹, R¹⁰, R¹¹, R¹², R¹³ and R¹⁴ are independently selected from (C₁-C₁₀) alkyl;
E is =N- or =C(R¹⁵)-, wherein R¹⁵ is selected from H, (C₁-C₁₀) alkyl, -OR¹⁶, -NR¹⁷₂, -SR¹⁸, and -SiR¹⁹R²⁰R²¹, wherein R¹⁶, R¹⁷, R¹⁸, R¹⁹, R²⁰ and R²¹ are independently selected from (C₁-C₁₀) alkyl;
m and n are each an integer independently selected from 0, 1, 2 and 3 and m + n = 3; and
o is an integer selected from 0, 1, 2 and 3.

In a fifth aspect, the present invention provides an elastomeric polymer which is obtainable by the method according to the fourth aspect of the invention and which may optionally be chain end-modified.

In a sixth aspect, the present invention provides a polymer composition comprising the polymer of the fifth aspect of the invention, including modified polymer, and one or more further components selected from (i) components which are added to or formed as a result of the method (polymerization process) which is used for making the polymer and (ii) components which remain after solvent removal from the polymerization process. Components which are added to the polymerization process include, in particular, oils (extender oils), stabilizers and further polymers. The polymer composition may optionally further comprise a least one vulcanizing agent.

In a seventh aspect, the present invention provides a vulcanized polymer composition which is obtainable by vulcanizing the polymer composition of the sixth aspect of the invention.

In an eighth aspect, the present invention provides a method of making the vulcanized polymer composition of the seventh aspect, comprising the step of vulcanizing the polymer composition of the sixth aspect, which comprises at least one vulcanizing agent.

In a ninth aspect, the present invention provides an article comprising at least one component formed from a vulcanized polymer composition according to the seventh aspect of the invention. The article may be, for example, a tire, a tire tread, a tire side wall, an automotive part, a footwear component, a golf ball, a belt, a gasket, a seal or a hose.

It was surprisingly found that crosslinked compositions comprising the polymer of the inveniton and silica or carbon black fillers exhibit an improved rolling resistance and heat build-up, while other characteristics, specifically wet grip and abrasion resistance, are at a similar level or can even be improved as well. The beneficial properties are specifically found in rubber compounds containing silica as a filler.

### DETAILED DESCRIPTION OF THE INVENTION

### COMPOUND OF FORMULA 2

The compound of Formula 2 according to the first aspect of the present invention is useful as a precursor for a metallated benzylsilane which is useful as a polymerization initiator in anionic polymerization of conjugated dienes and aromatic vinyl compounds.

In one embodiment of the compound of Formula 2, R¹ is selected from hydrogen and (C₁-C₈) alkyl; R² is selected from (C₁-C₁₈) alkyl, (C₆-C₁₈) aryl and (C₇-C₁₈) alkylaryl; and X is -N(R⁷)-, wherein R⁷ is selected from (C₁-C₈) alkyl and (C₆-C₁₈) aryl. Preferably, in this embodiment, o is an integer selected from 1, 2 and 3 and at least one B is selected from -OR⁸, -NR⁹₂, -SR¹⁰ and -SiR¹¹R¹²R¹³, wherein R⁸, R⁹, R¹⁰, R¹¹, R¹² and R¹³ are independently selected from (C₁-C₁₀) alkyl.

Specific preferred species of the compound of Formula 2 include the following compounds:

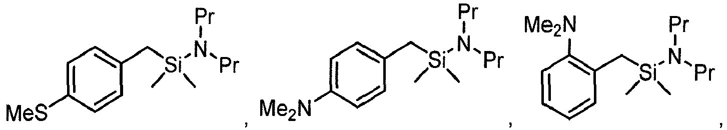

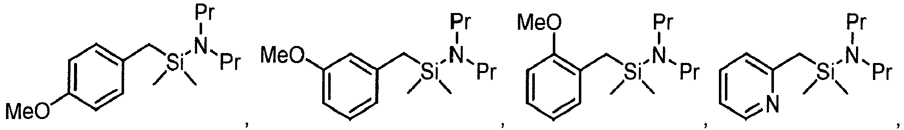

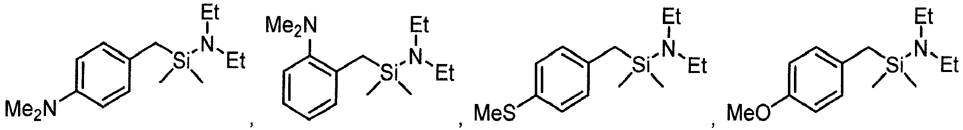

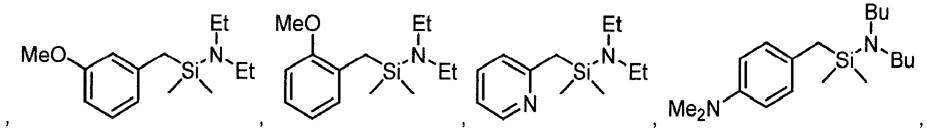

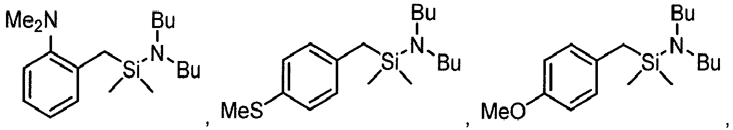

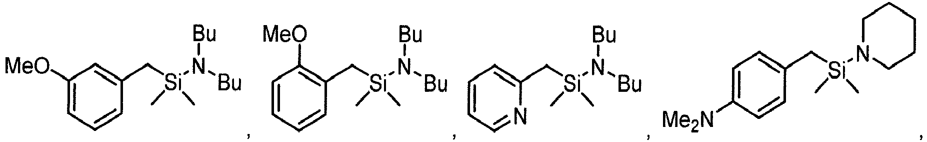

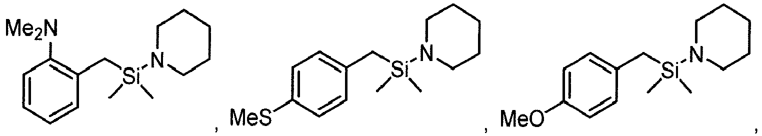

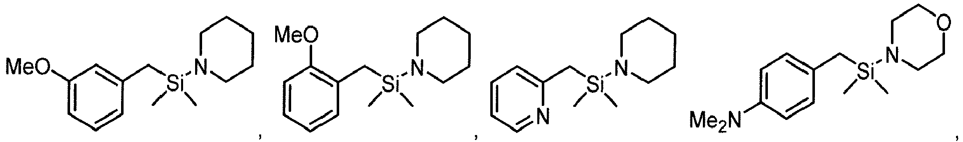

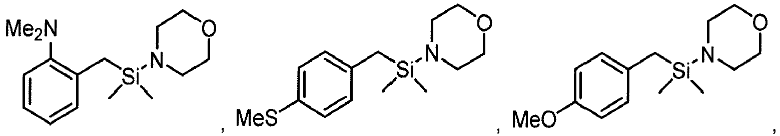

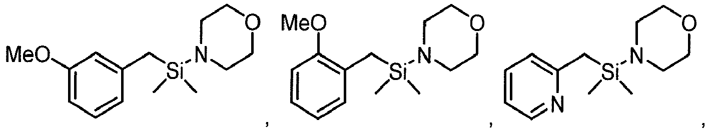

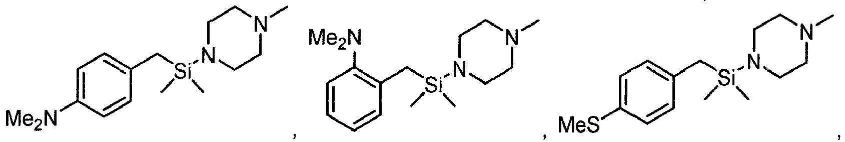

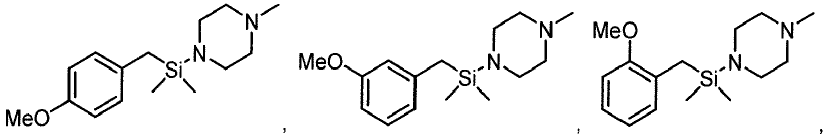

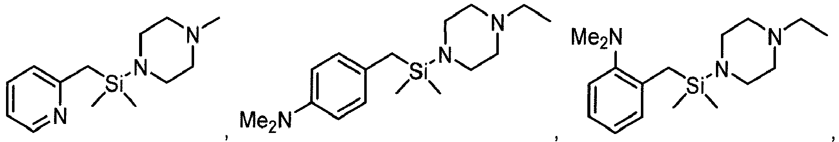

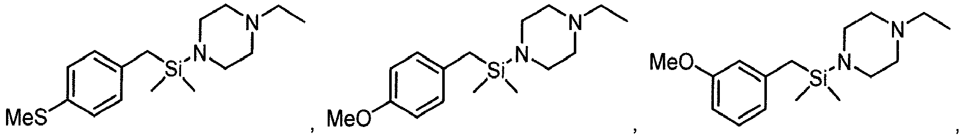

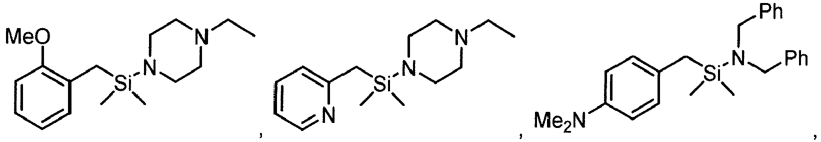

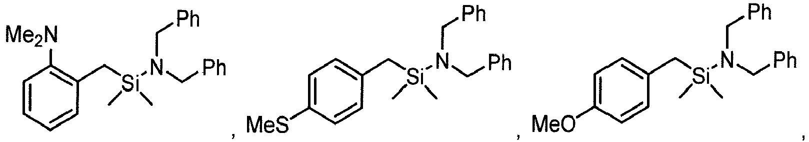

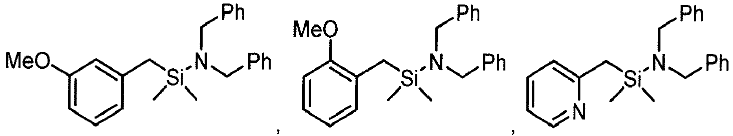

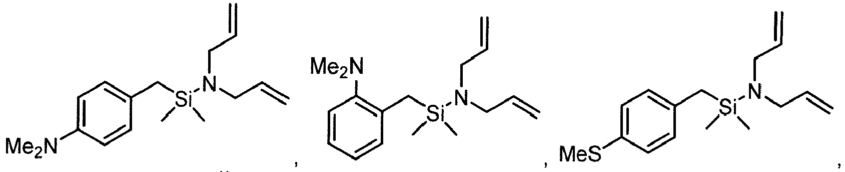

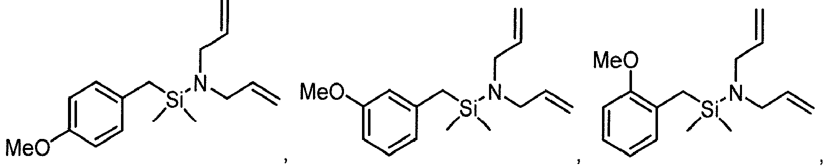

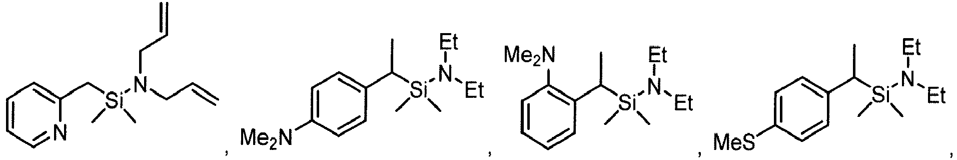

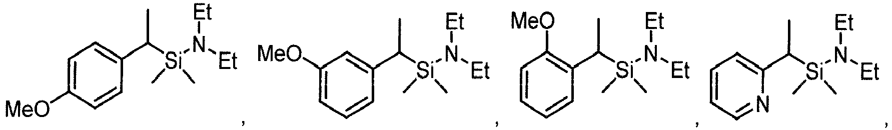

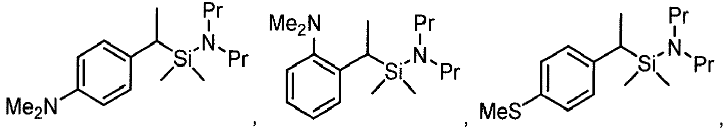

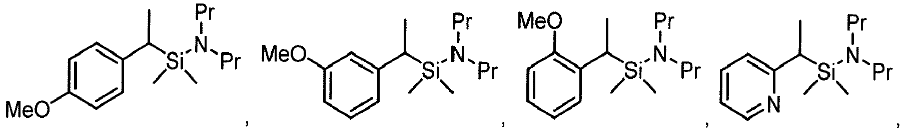

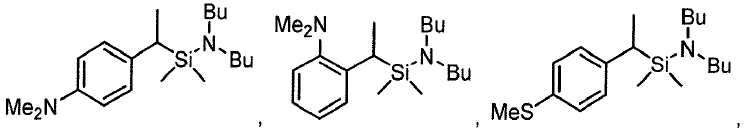

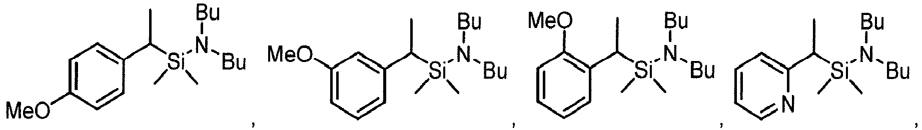

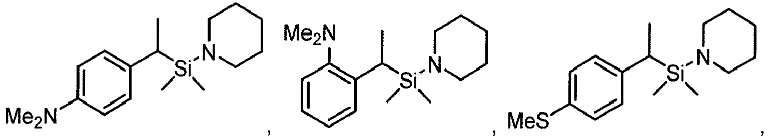

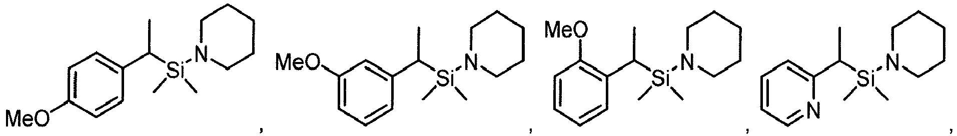

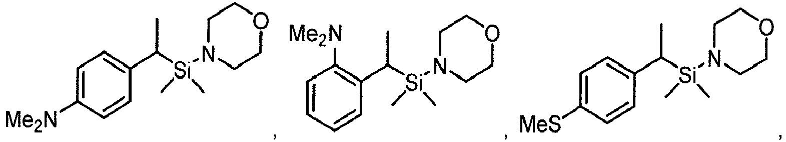

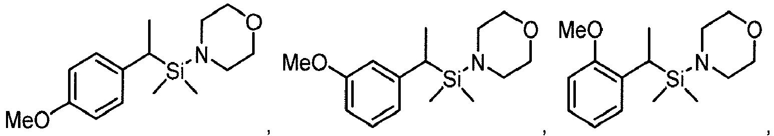

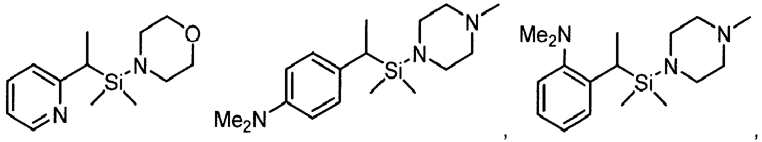

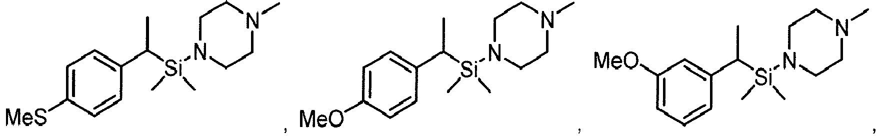

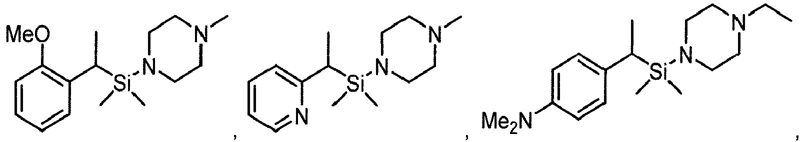

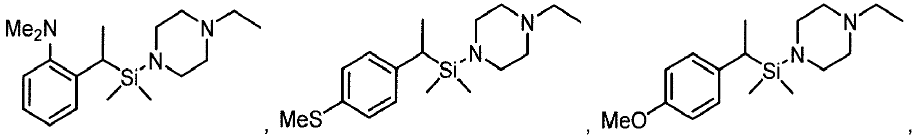

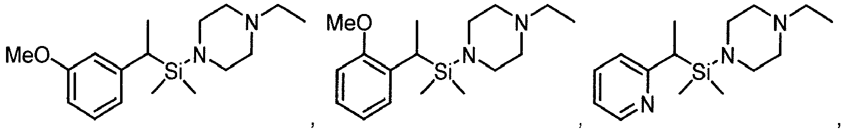

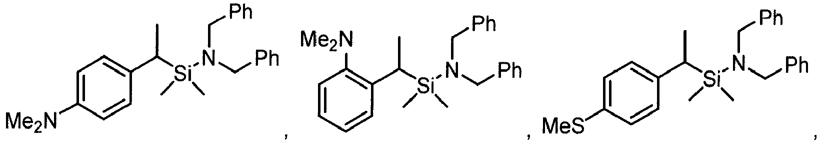

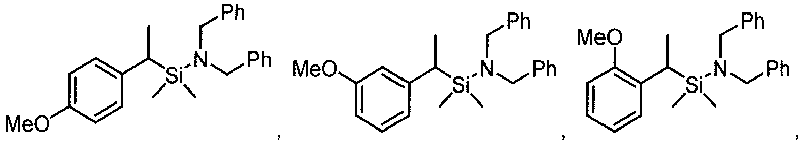

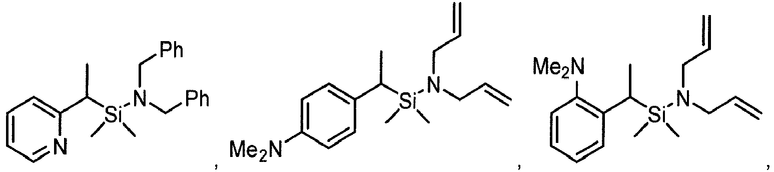

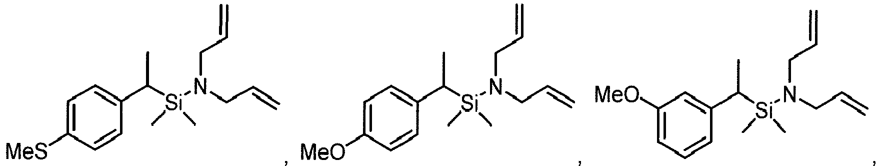

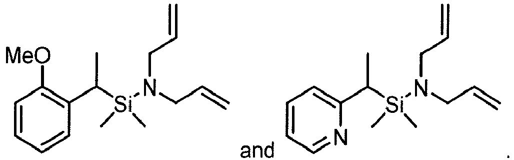

### POLYMERIZATION INITIATOR OF FORMULA 1

The polymerization initiator of Formula 1 according to the second aspect of the present invention is a metallated benzylsilane. In one embodiment thereof, R¹ is selected from hydrogen and (C₁-C₈) alkyl; R² is selected from (C₁-C₁₈) alkyl, (C₆-C₁₈) aryl and (C₇-C₁₈) alkylaryl; and X is -N(R⁷)-, wherein R⁷ is selected from (C₁-C₈) alkyl and (C₆-C₁₈) aryl. Preferably, in this embodiment, M¹ is lithium; and o is an integer selected from 1, 2 and 3 and at least one B is selected from -OR⁸, -NR⁹₂, -SR¹⁰ and -SiR¹¹R¹²R¹³, wherein R⁸, R⁹, R¹⁰, R¹¹, R¹² and R¹³ are independently selected from (C₁-C₁₀) alkyl.

Specific preferred species of the polymerization initiator of Formula 1 include the following compounds:

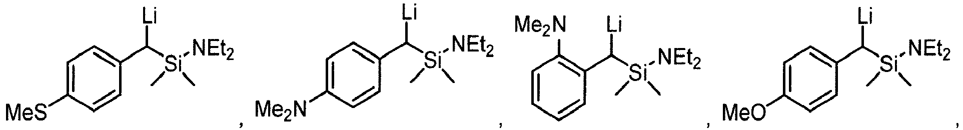

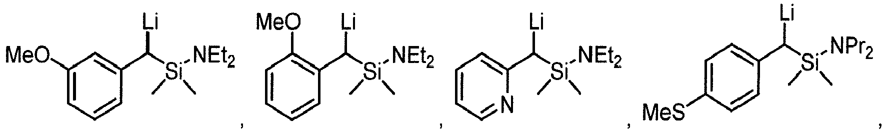

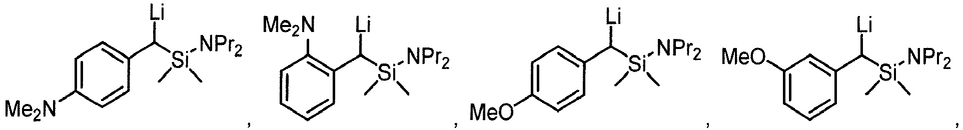

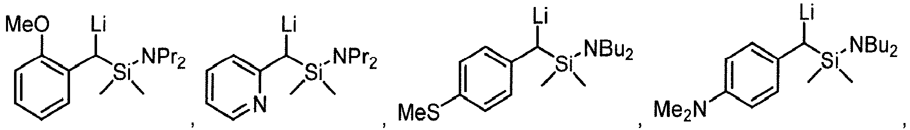

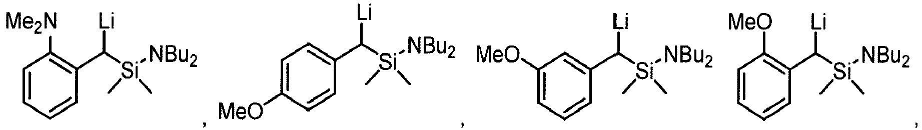

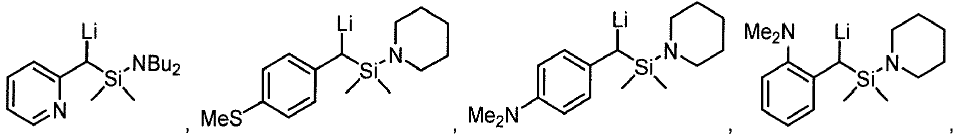

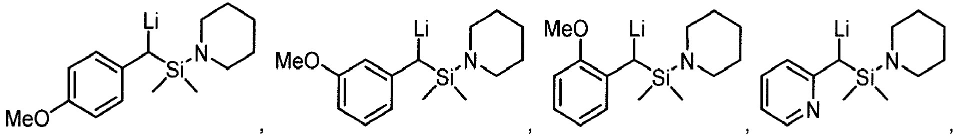

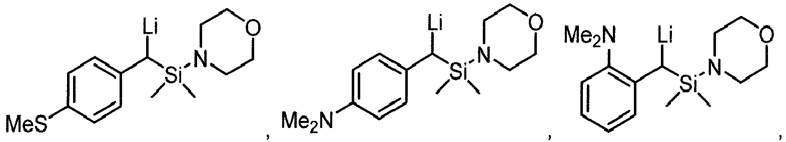

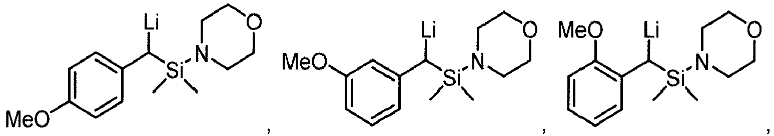

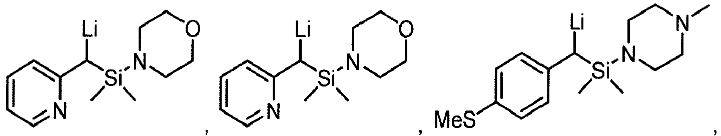

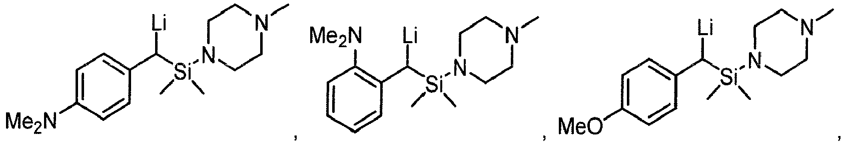

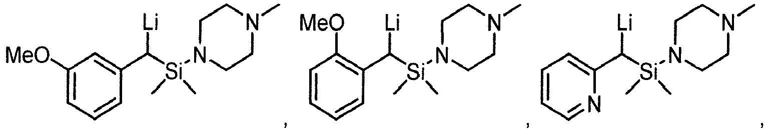

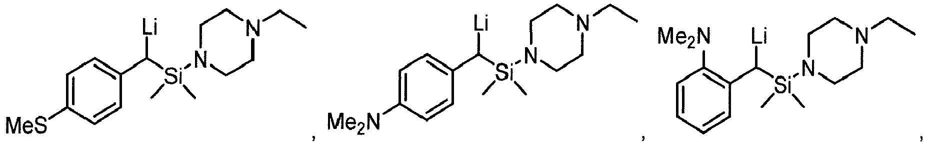

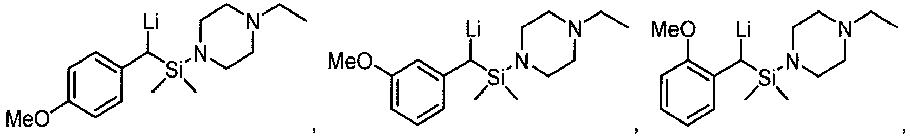

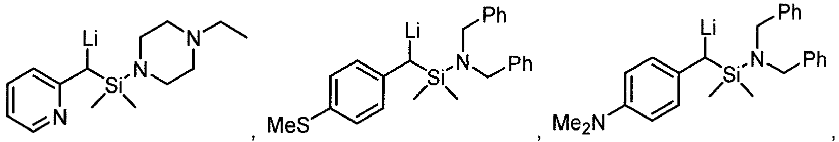

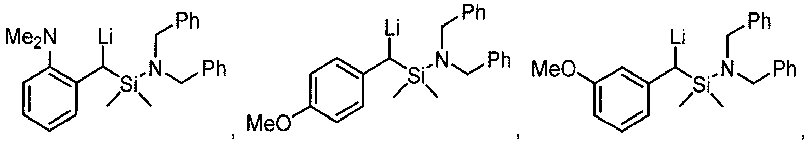

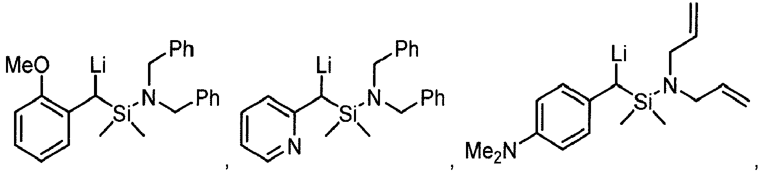

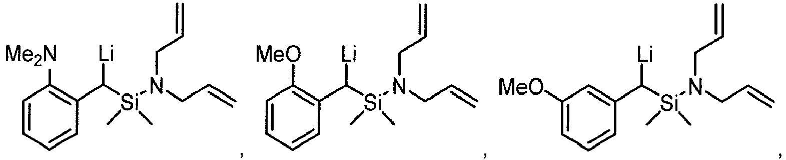

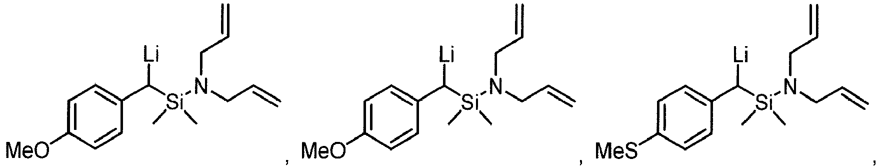

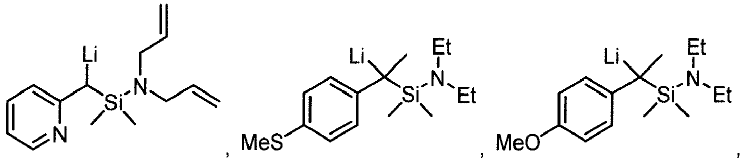

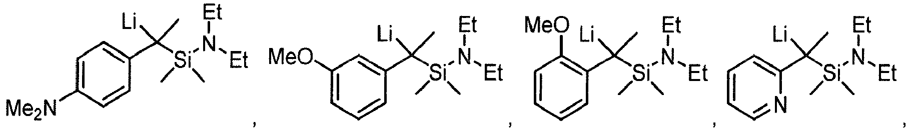

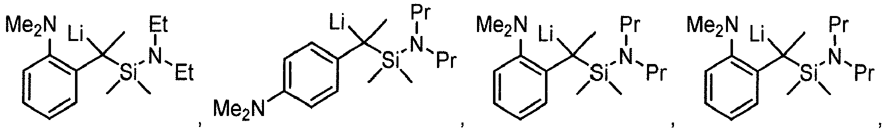

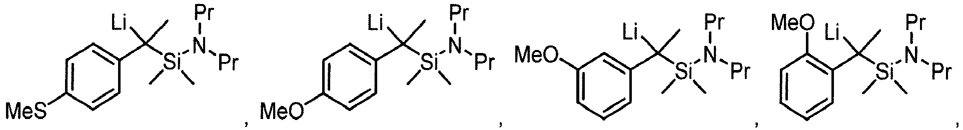

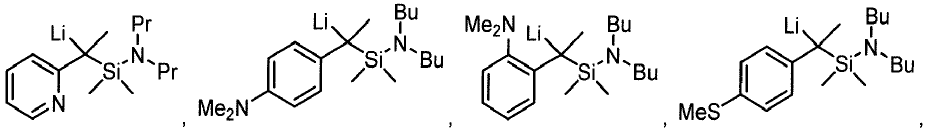

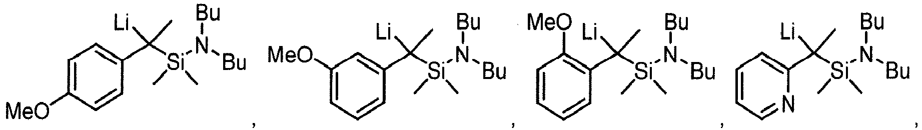

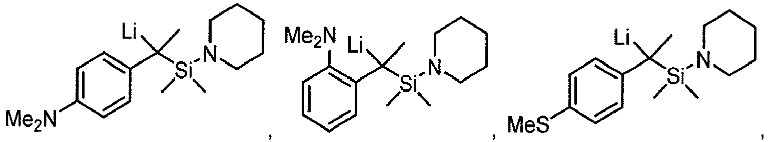

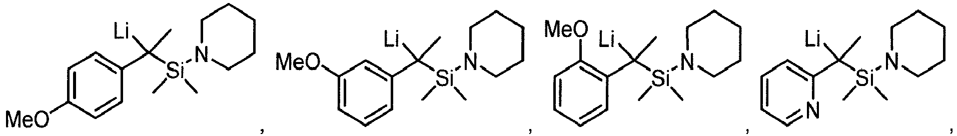

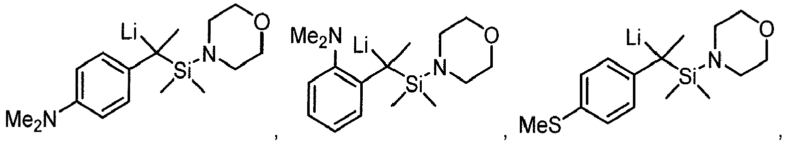

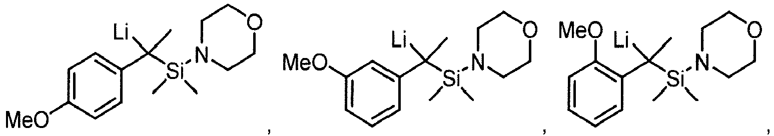

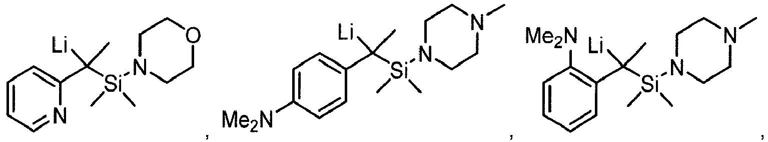

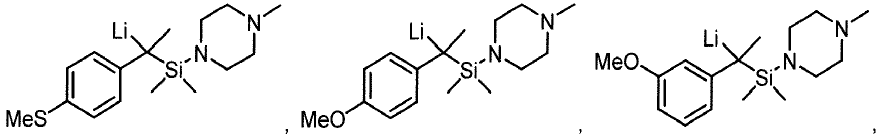

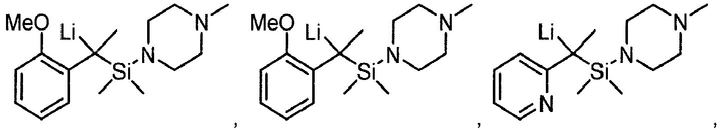

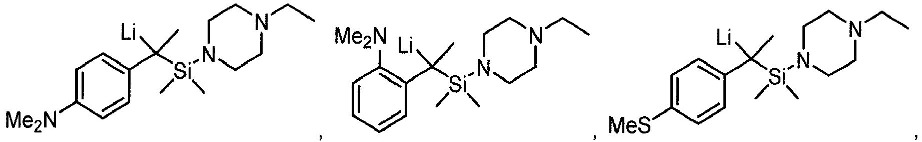

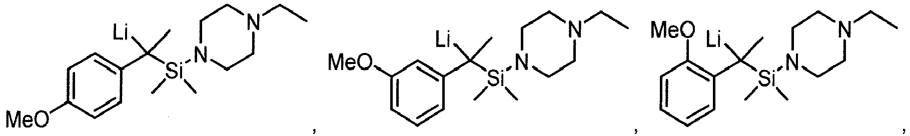

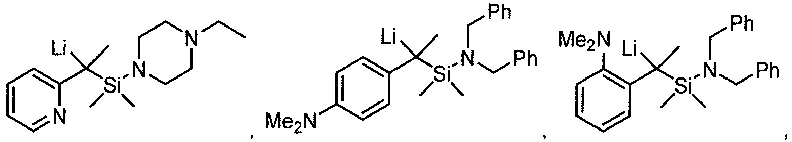

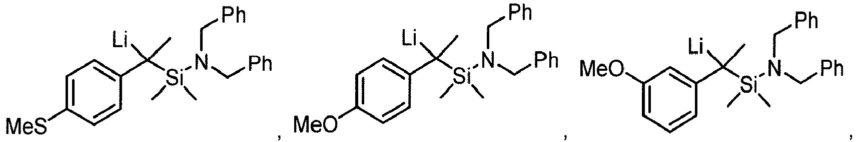

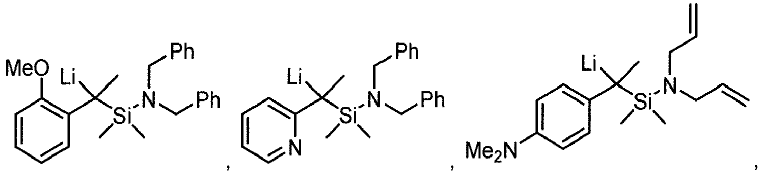

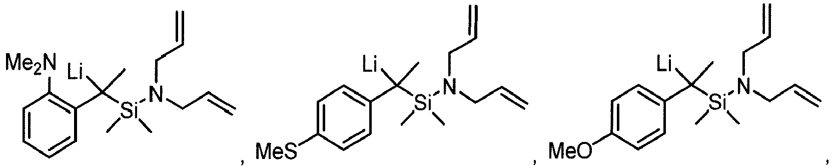

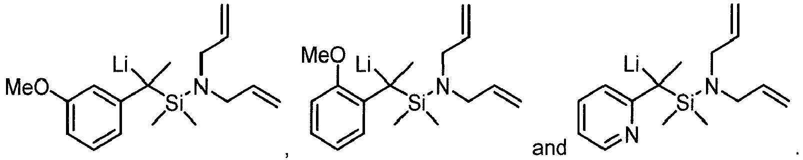

### METHOD OF MAKING THE POLYMERIZATION INITIATOR OF FORMULA 1

The method of making the polymerization initiator of Formula 1 according to the third aspect of the present invention comprises the step of reacting a compound of Formula 2 as defined above with a compound of Formula 3 as defined above. The reaction is usually carried out at a ratio of the compound of Formula 1 to the compound of the Formula 3, in terms of mole equivalents, in the range of from 0.5 to 4, preferably from 0.75 to 3 and even more preferably from 0.9 to 1.1. The reaction is preferably performed in a nonpolar solvent, such as a hydrocarbon solvent, including aliphatic and aromatic solvents, preferably an aliphatic solvent, such as hexane, heptane, pentane, isopar, cyclohexane or methylcyclohexane. A mixture of two or more solvent compounds may be used as the nonpolar solvent. The reaction is usually conducted for a period of from 2 seconds to 7 days, preferably from 5 seconds to 5 days, even more preferably from 10 seconds to 3 days, at a temperature ranging from -60°C to 130°C, preferably from 0°C to 100°C and even more preferably from 20°C to 80°C. The reaction can optionally be carried out in the presence of one or more Lewis bases such as triethylamine, 1,4-diazabicyclo[2.2.2]octane (DABCO), N,N'-dimethylpiperazine, tetramethylethylenediamine (TMEDA), diethylether, dioxane, ethyleneglycol dimethylether (glyme), diglyme, tetrahydrofuran, 2,2-di(2-tetrahydrofuryl)propane (DTHFP) and crown ethers (such as 12-crown-4, 15-crown-5 and 18-crown-6), preferably TMEDA.

For increasing the storage stability (shelf life) of the polymerization initiator obtained, it is possible to contact the resulting reaction mixture containing the polymerization initiator and including alkali metal M¹ with an amount of one or more polymerizable monomers selected from conjugated diene compounds as defined further below, preferably butadiene and/or isoprene, and aromatic vinyl compounds as defined further below, preferably styrene. For this purpose, an amount of up to 1000 equivalents, preferably up to 200 equivalents, most preferably up to 75 equivalents of polymerizable monomer per alkali metal equivalent is suitably used.

### METHOD OF MAKING AN ELASTOMERIC POLYMER

The method of making an elastomeric polymer according to the fourth aspect of the present invention comprises the step of polymerizing one or more polymerizable conjugated diene compounds and optionally one or more polymerizable aromatic vinyl compounds in the presence of a polymerization initiator of Formula 4 as defined above. The polymerization of the polymerizable compounds in the presence of the polymerization initiator produces a living polymer chain.

The polymerization may be carried out in the presence of one or more chain end-modifying agents as defined further below. The polymerization may also be carried out in the presence of one or more randomizer agents as defined further below. The polymerization may also be carried out in the presence of one or more coupling agents as defined further below.

The method of making the elastomeric polymer is typically carried out in a conventional manner in a polymerization solvent as a solution polymerization, wherein the polymer formed is substantially soluble in the reaction mixture, or as a suspension/slurry polymerization, wherein the polymer formed is substantially insoluble in the reaction medium. Suitable polymerization solvents include non-polar aliphatic and non-polar aromatic solvents, preferably hexane, heptane, butane, pentane, isopar, cyclohexane, toluene and benzene. The solution polymerization typically takes place at lower pressures, preferably below 10 MPa, preferably in a temperature range of from 0 to 120°C. The polymerization is generally conducted under batch, continuous or semi-continuous polymerization conditions.

Generally applicable procedures for the polymerization including polar coordinator compounds and accelerators, each to increase the reactivity of the initiator, to randomly arrange aromatic vinyl compounds, to randomly arrange 1,2-polybutadiene or 1,2-polyisoprene or 3,4-polyisoprene units introduced in the polymer; the amounts of each compound; monomer(s); and suitable process conditions are described in WO 2009/148932, the content of which is fully incorporated herein by reference.

### MONOMERS

The monomers used in the method of making an elastomeric polymer according to the fourth aspect of the present invention and, thus, in the elastomeric polymer according to the fifth aspect of the invention are generally selected from polymerizable conjugated diene compounds and optionally polymerizable aromatic vinyl compounds.

Suitable polymerizable conjugated diene compounds include 1,3-butadiene, 2-(C₁-C₅ alkyl)-1,3-butadiene such as isoprene (2-methyl-1,3-butadiene), 2,3-dimethyl-1,3-butadiene, 1,3-pentadiene, 2,4-hexadiene, 1,3-hexadiene, 1,3-heptadiene, 1,3-octadiene, 2-methyl-2,4-pentadiene, cyclopentadiene, 2,4-hexadiene and 1,3-cyclooctadiene. A single conjugated diene compound may be used, or two or more conjugated diene compounds may be used in combination. 1,3-Butadiene and isoprene are preferred conjugated diene compounds, and 1,3-butadiene is a particularly preferred one.

Suitable polymerizable aromatic vinyl compounds are monovinylaromatic compounds, in particular styrene, C₁-C₄ alkyl-substituted styrene such as 2-methylstyrene, 3-methylstyrene, 4-methylstyrene, 2,4-dimethylstyrene, 2,4,6-trimethylstyrene, α-methylstyrene, 2,4-diisopropylstyrene and 4-tert-butylstyrene, stilbene, vinyl benzyl dimethylamine, (4-vinylbenzyl)dimethyl aminoethyl ether, N,N-dimethylaminoethyl styrene, tert-butoxystyrene and vinylpyridine. A single aromatic vinyl compound may be used in combination with the one or more conjugated diene compounds, or two or more aromatic vinyl compounds may be used in combination with the one or more conjugated diene compounds. Styrene is a particularly preferred aromatic vinyl compound.

The monovinylaromatic compound(s) may be used, depending on the application, in total amounts of 40-70 wt.%, or 15-40 wt.%, or 2-15 wt.%, based on the total weight of monomers used in the polymerization reaction.

In addition to the above-mentioned conjugated diene compounds and aromatic vinyl compounds, it is possible to additionally use one or more monomers selected from α-olefins and nonconjugated diolefins, such as C₂-C₂₀ α-olefins and non-conjugated C₄-C₂₀ diolefins, especially norbornadiene, ethylidenenorbornene, 1,4-hexadiene, 1,5-hexadiene, 1,7-octadiene, 4-vinylcyclohexene and divinylbenzene, including 1,2-divinylbenzene, 1,3-divinylbenzene and 1,4-divinylbenzene. Di- or higher vinylaromatic compounds such as divinylbenzene, including 1,2-divinylbenzene, 1,3-divinylbenzene and 1,4-divinylbenzene, may be used in a total amount of 1 wt.% or less, based on the total weight of monomers used in the polymerization reaction. In a preferred embodiment, divinylbenzene is used in combination with butadiene and/or isoprene and optionally styrene, thus forming, e.g., SBR (styrene butadiene rubber), BR (butadiene rubber), IR (isoprene rubber), ISBR (isoprene styrene butadiene rubber) or SIR (styrene isoprene rubber).

### CHAIN END-MODIFYING AGENTS

For further control of polymer properties, one or more chain end-modifying agents (or briefly "modifying agents") may be used for reaction with the terminal ends of the polymer chain(s) in the polymer of the invention. Generally, silane-sulfide omega chain end modifying agents such as disclosed in WO 2007/047943, WO 2009/148932, US 6,229,036 and US 2013/0131263, each incorporated herein by reference in its entirety, can be used for this purpose. Preferably, the one or more chain end-modifying agents are selected from those described, generally or in specific embodiments, in WO 2015/010710, incorporated herein by reference in its entirety. In a preferred embodiment, the one or more chain end-modifying agents are selected from the chain end-modifying agents represented in WO 2015/010710 by Formulas 8, 9, 10, 11, 12, 13, 14, 15 and 16 and Lewis base adducts thereof.

In a particularly preferred embodiment, one or more chain end-modifying agents represented by Formula 8 or Formula 9 as described in WO 2015/010710 are used.

When two or more chain end-modifying agents are used for the purpose of chain end modification, they can be added one after another to a solution of the living anionic polymer, or they can be mixed together before adding the resulting mixture to a solution of the living anionic polymer.

The chain end-modifying agents may be added intermittently (at regular or irregular intervals) or continuously during the polymerization, but are preferably added at a conversion rate of the polymerization of more than 80 percent and more preferably at a conversion rate of more than 90 percent. Preferably, a substantial amount of the polymer chain ends is not terminated prior to the reaction with the chain end modifying agent; that is, living polymer chain ends are present and are capable of reacting with the modifying agent. The chain end modification reaction may occur before, after or during the addition of any coupling agent. Preferably the chain end modification reaction is completed after the addition of any coupling agent. See, for example, WO 2009/148932, incorporated herein by reference in its entirety.

In one embodiment, more than 20 percent, preferably more than 35 percent and even more preferably more than 50 percent of the polymer chains, as determined by GPC, formed in the course of the polymerization process, are linked with chain end-modifying agent in the process of polymer chain end modification.

In one embodiment, more than 50 percent, preferably more than 60 percent and more preferably more than 75 percent, as determined by GPC, of the living polymer of the invention (still remaining after the coupling reaction) react with a chain end modifying agent.

### RANDOMIZER AGENTS

Polar coordinator compounds, also referred to as randomizer agents, may optionally be added to the polymerization to adjust the microstructure of the conjugated diene portion (including the content of vinyl bonds of the polybutadiene fraction), or to adjust the composition distribution of the aromatic vinyl compound, thus serving as a randomizer component. Two or more randomizer agents may be used in combination. Exemplary randomizer agents are Lewis bases and include, but are not limited to, ether compounds such as diethyl ether, di-n-butyl ether, ethylene glycol diethyl ether, ethylene glycol dibutyl ether, diethylene glycol dimethyl ether, propylene glycol dimethyl ether, propylene glycol diethyl ether, propylene glycol dibutyl ether, alkyltetrahydrofurylethers such as methyltetrahydrofurylether, ethyltetrahydrofurylether, propyltetrahydrofurylether, butyltetrahydrofurylether, hexyltetrahydrofurylether, octyltetrahydrofurylether, tetrahydrofuran, 2,2-(bistetrahydrofurfuryl)propane, bistetrahydrofurfurylformal, methyl ether of tetrahydrofurfuryl alcohol, ethyl ether of tetrahydrofurfuryl alcohol, butyl ether of tetrahydrofurfuryl alcohol, α-methoxytetrahydrofuran, dimethoxybenzene and dimethoxyethane, and tertiary amine compounds such as triethylamine, pyridine, N,N,N',N'-tetramethyl ethylenediamine, dipiperidinoethane, methyl ether of N,N-diethylethanolamine, ethyl ether of N,N-diethylethanolamine and N,N-diethylethanolamine. Examples of preferred randomizer compounds are identified in WO 2009/148932, incorporated herein by reference in its entirety. The randomizer agent(s) will typically be added at a molar ratio of randomizer agent(s) to polymerization initiator(s) of from 0.012:1 to 10:1, preferably from 0.1:1 to 8:1 and more preferably from 0.25:1 to about 6:1.

### COUPLING AGENTS

The polymer of the invention may optionally be reacted with one or more coupling agents to induce branching.

Coupling agents include tin tetrachloride, tin tetrabromide, tin tetrafluoride, tin tetraiodide, silicon tetrachloride, silicon tetrabromide, silicon tetrafluoride, silicon tetraiodide, alkyl tin and alkyl silicon trihalides as well as dialkyl tin and dialkyl silicon dihalides. Polymers coupled with tin or silicon tetrahalides have a maximum of four arms, polymers coupled with alkyl tin and alkyl silicon trihalides have a maximum of three arms, and polymers coupled with dialkyl tin and dialkyl silicon dihalides have a maximum of two arms. Hexahalo disilanes or hexahalo disiloxanes can also be used as coupling agents, resulting in polymers with a maximum of six arms. Useful tin and silicon halide coupling agents include: SnCl₄, (R₁)₃SnCl, (R₁)₂SnCl₂, R₁SnCl₃, SiCl₄, R₁SiCl₃, (R₁)₂SiCl₂, (R₁)₃SiCl, Cl₃Si-SiCl₃, Cl₃Si-O-SiCl₃, Cl₃Sn-SnCl₃ and Cl₃Sn-O-SnCl₃ wherein R₁ is a hydrocarbyl group, preferably a branched or linear C₁-C₁₈ alkyl group. Examples of tin and silicon alkoxide coupling agents further include: Sn(OMe)₄, Si(OMe)₄, Sn(OEt)₄ and Si(OEt)₄. The most preferred coupling agents are: SnCl₄, SiCl₄, Sn(OMe)₄ and Si(OMe)₄.

The coupling agents may be added intermittently (at regular or irregular intervals) or continuously during the polymerization, but are preferably added at a conversion rate of the polymerization of more than 80 percent and more preferably at a conversion rate of more than 90 percent. The coupling agent will typically be added only after a high degree of conversion has already been achieved.

For example, a coupling agent can be continuously added during the polymerization, in cases where asymmetrical coupling is desired. Such continuous addition is normally carried out in a reaction zone separate from the zone where the bulk of the polymerization is taking place. The coupling agent can be added in a hydrocarbon solution, for example, in cyclohexane, to the polymerization admixture, with suitable mixing for distribution and reaction. Typically, from 0.01 to 2.0 mol, preferably from 0.02 to 1.5 mol and more preferably from 0.04 to 0.6 mol of the coupling agent is used for every 4.0 moles of living anionic polymer chain ends.

Preferably, a substantial amount of the polymer chain ends is not terminated prior to the reaction with the coupling agent; that is, living polymer chain ends are present and capable of reacting with the coupling agent in a polymer chain coupling reaction. The coupling reaction occurs before, after or during the addition of any chain end-modifying agent. The coupling reaction is preferably completed prior to the addition of the chain end-modifying agent. In some embodiments, between 5 and 20 percent of the living polymer chain ends, as determined by GPC, have reacted with coupling agent prior to the addition of the chain end-modifying agent. In other embodiments, between 20 and 35 percent of the living polymer chain ends have reacted with coupling agent prior to the addition of the chain end-modifying agent. In yet another embodiment, between 35 and 50 percent of the living polymer chain ends have reacted with coupling agent prior to the addition of the chain end-modifying agent.

A combination of different coupling agents such as Bu₂SnCl₂ and SnCl₄; Me₂SiCl₂ and Si(OMe)₄; Me₂SiCl₂ and SiCl₄; SnCl₄ and Si(OMe)₄; SnCl₄ and SiCl₄ can also be used to couple polymer chains. It is particularly desirable to use a combination of tin and silicon coupling agents in tire tread compounds that contain both silica and carbon black. In such case, the molar ratio of the tin to the silicon compound will normally be within the range of from 20:80 to 95:5; more typically from 40:60 to 90:10 and preferably from 60:40 to 85:15. Most typically, an amount of from about 0.001 to 4.5 mmol of coupling agent is employed per 100 grams of polymer. It is normally preferred to utilize from about 0.05 to about 0.5 mmol of coupling agent per 100 grams of polymer to obtain the desired Mooney viscosity and to enable subsequent chain end functionalization of the remaining living polymer fraction. Larger quantities tend to produce polymers containing terminally reactive groups or insufficient coupling and only enable an insufficient chain end modification.

The polymer coupling reaction may be carried out in a temperature range of from 0°C to 150°C, preferably from 15°C to 120°C and even more preferably from 40°C to 100°C. There is no limitation for the duration of the coupling reaction. However, with respect to an economical polymerization process, for example in the case of a batch polymerization process, the coupling reaction is usually stopped at about 5 to 60 minutes after the addition of the coupling agent.

In a preferred embodiment of the invention divinylbenzene is used as a coupling agent. The divinylbenzene will typically be added together with the monomers before the start of the polymerization by addition of the initiator.

### ELASTOMERIC POLYMER

The elastomeric polymer according to the fifth aspect of the present invention is can be, e.g., a homopolymer derived from a conjugated diolefin, a copolymer derived from a conjugated diolefin monomer with an aromatic vinyl monomer and/or a terpolymer of one or two types of conjugated diolefins with one or two types of aromatic vinyl compounds. Examples of particularly useful polymers include homopolymers of butadiene or isoprene and random or block co- and terpolymers of butadiene, isoprene and styrene, especially a random copolymer of butadiene with isoprene and a random or block copolymer of butadiene with styrene.

Although there are no specific limitations regarding the amount of aromatic vinyl monomer used in the polymer, for most applications aromatic vinyl monomers constitute from 1 to 60%, preferably from 2 to 55% and more preferably from 5 to 50% by weight, based on the total weight of the polymer. An amount of less than 2% by weight may lead to a deteriorated balance of rolling resistance, wet skid and abrasion resistance and to reduced tensile strength, whereas an amount of more than 60% by weight may lead to increased hysteresis loss. The polymer may be a block or random copolymer of an aromatic vinyl monomer and a conjugated diene monomer, and preferably 40% by weight or more of the aromatic vinyl monomer units are linked singly, and 10 % by weight or less are polymeric "blocks" of eight or more aromatic vinyl monomers linked successively (the length of successively linked aromatic vinyl units can be measured by an ozonolysis-gel permeation chromatography method developed by Tanaka et al. (Polymer, Vol. 22, pp. 1721-1723 (1981)). Copolymers outside this range tend to exhibit increased hysteresis loss.

Although there are no specific limitations regarding the content of 1,2-bonds and/or 3,4-bonds (hereinafter called "vinyl bond content") of the conjugated diolefin portion of the polymer, for most applications the vinyl bond content is preferably from 2 to 90 % by weight, particularly preferably from 4 to 80 % by weight (based on the total weight of the diolefin portion). If the vinyl bond content in the polymer is less than 2 % by weight, the resulting product may have an inferior balance of wet skid resistance, rolling resistance and abrasion resistance. If the vinyl content in the polymer exceeds 90 % by weight, the resulting product may exhibit deteriorated tensile strength and abrasion resistance and a relatively large hysteresis loss.

Typically, the number average molecular weight of the polymers of the present invention is in the range of 5 to 5000 kg/mol, preferably from 10 to 3000 kg/mol, and more preferably in the range of from 15 to 2000 kg/mol, as determined by gel permeation chromatography.

### POLYMER COMPOSITIONS

The polymer composition according to the sixth aspect of the present invention comprises the polymer of the invention, including modified polymer, and one or more further components selected from (i) components which are added to or formed as a result of the polymerization process used for making the polymer and (ii) components which remain after solvent removal from the polymerization process. Generally, the first polymer composition is the solvent-free result of the method of making the polymer, further comprising components selected from oils (extender oils), stabilizers and further (non-inventive) polymers. Suitable oils are as defined herein. The further polymers can be made separately, for example in a different polymerization reactor, in solution and can be added to the reactor prior to completion of the polymer manufacturing process for the polymer.

While dependent upon the specific polymer and desired end use application, the polymer composition of the present invention, as obtained after removal of solvent and process water from the polymerization process, preferably has a Mooney viscosity (ML 1+4, 100°C, as measured in accordance with ASTM D 1646 (2004) using a Monsanto MV2000 instrument) in the range of from 10 to 150, preferably from 10 to 120, and more preferably in the range of from 20 to 120 If the Mooney viscosity of the polymer composition is more than 150, the processability, as reflected by filler incorporation and heat build-up in the internal mixer, banding on the roll mill, extrusion rate, extrudate die swell, smoothness, etc., is likely to be negatively affected because the compounding machinery used by the manufacturer is not designed to handle such high Mooney rubber grades, and the cost of processing increases. In some cases a Mooney viscosity of less than 20 may not be preferred due to increased tack and cold flow of the uncrosslinked polymer, resulting in difficult handling, poor green strength and poor dimensional stability during storage. In other cases, when the polymer composition is used as a softener, compatibilizer or processing aid in polymer formulations, a Mooney viscosity of less than 20 may be preferred.

The preferred molecular weight distribution of the polymer composition as obtained after solvent removal from the polymerization process, reflected by the ratio of weight average molecular weight to number average molecular weight (M_{w}/Mₙ), ranges from 1.0 to 10.0, preferably from 1.1 to 8.0 and more preferably from 1.2 to 4.5.

In the composition, the polymer present is preferably composed of at least 15% by weight of the polymer as obtained in the polymerization reaction, more preferably at least 30% by weight and even more preferably at least 45% by weight. The remaining amount of polymer is composed of the further polymers mentioned above. Examples of suitable polymers are identified in WO 2009/148932 and preferably include styrene-butadiene copolymer, natural rubbers, polyisoprene and polybutadiene. It is desirable that such further polymers have a Mooney viscosity (ML 1 +4, 100 °C as measured in accordance with ASTM D 1646 (2004)) in the range of from 20 to 150, preferably from 30 to 120.

### OILS

One or more oils may be used in combination with the uncrosslinked polymer to reduce viscosity or Mooney values or to improve processability of the polymer composition and various performance properties of the crosslinked (vulcanized) polymer compositions.

Oils can be added to the polymer composition prior to the end of the polymer preparation process and/or as a separate component after the preparation process. For representative examples and classification of oils see WO 2009/148932 and US 2005/0159513, each of which is incorporated herein by reference in its entirety.

Representative oils include MES (Mild Extraction Solvate), RAE (Residual Aromatic Extract, including T-RAE (Treated Residual Aromatic Extract) and S-RAE), DAE (Distillate Aromatic Extract, including TDAE (Treated Distillated Aromatic Extract)) and NAP (light and heavy naphthenic oils, including Nytex 4700, Nytex 8450, Nytex 5450, Nytex 832, Tufflo 2000 and Tufflo 1200). In addition, native oils, including vegetable oils, can be used as extender oils. Representative oils also include functionalized variations of these oils, particularly epoxidized or hydroxylated oils. The oils may contain varying concentrations of polycyclic aromatic compounds, paraffinics, naphthenics and aromatics and may have different glass transition temperatures.

### PROCESSING AIDS

Processing aids can optionally be added to the polymer composition. They are usually added for reducing the viscosity. As a result, the mixing period is decreased and/or the number of mixing steps is reduced and, consequently, less energy is consumed and/or a higher throughput in the course of the rubber compound extrusion process is achieved. Representative processing aids are described in Rubber Handbook, SGF, The Swedish Institution of Rubber Technology 2000 and in Werner Kleemann, Kurt Weber, Elastverarbeitung-Kennwerte und Berechnungsmethoden, Deutscher Verlag fur Grundstoffindustrie (Leipzig, 1990), each of which is incorporated herein by reference in its entirety.

Examples of representative processing aids include in particular:
(A) fatty acids, including oleic acid, priolene, pristerene and stearic acid;
(B) fatty acid salts, including Aktiplast GT, PP, ST, T, T-60, 8, F; Deoflow S; Kettlitz Dispergator FL, FL Plus; Dispergum 18, C, E, K, L, N, T, R; Polyplastol 6, 15, 19, 21, 23; Struktol A50P, A60, EF44, EF66, EM16, EM50, WA48, WB16, WB42, WS180, WS280 and ZEHDL;
(C) dispersing agents, including Aflux 12, 16, 42, 54, 25; Deoflow A, D; Deogum 80; Deosol H; Kettlitz Dispergator DS, KB, OX; Kettlitz-Mediaplast 40, 50, Pertac/GR; Kettlitz-Dispergator SI; Struktol FL and WB 212; and
(D) dispersing agents or processing aids for highly active white fillers, including Struktol W33, WB42, HT207, HT254, HT276; Ultra-Flow 440, 700S (Performance Additives); Sylvatraxx1001, Sylvatraxx1035, Sylvatraxx1085 and Sylvatraxx3400 (Arizona Chemical).

### FILLERS

In one embodiment, the polymer composition of the invention comprises one or more fillers, serving as reinforcement agents. Examples of suitable fillers include carbon black (including electroconductive carbon black), carbon nanotubes (CNT) (including discrete CNT, hollow carbon fibers (HCF) and modified CNT carrying one or more functional groups, such as hydroxyl, carboxyl and carbonyl groups) graphite, graphene (including discrete graphene platelets), silica, carbon-silica dual-phase filler, clays (layered silicates, including exfoliated nanoclay and organoclay), calcium carbonate, magnesium carbonate, lignin, amorphous fillers, such as glass particle-based fillers, starch-based fillers, and combinations thereof. Further examples of suitable fillers are described in WO 2009/148932 which is fully incorporated herein by reference.

Examples of suitable carbon black include the one conventionally manufactured by a furnace method, for example having a nitrogen adsorption specific surface area of 50-200 m²/g and DBP oil absorption of 80-200 ml/100 grams, such as carbon black of the FEF, HAF, ISAF or SAF class, and electroconductive carbon black. In some embodiments, high agglomeration-type carbon black is used. Carbon black is typically used in an amount of from 2 to 100 parts by weight, or 5 to 100 parts by weight, or 10 to 100 parts by weight, or 10 to 95 parts by weight per 100 parts by weight of the total polymer.

Examples of suitable silica fillers include wet process silica, dry process silica and synthetic silicate-type silica. Silica with a small particle diameter and high surface area exhibits a high reinforcing effect. Small diameter, high agglomeration-type silica (i.e. having a large surface area and high oil absorptivity) exhibits excellent dispersibility in the polymer composition, resulting in superior processability. An average particle diameter of silica in terms of the primary particle diameter may be from 5 to 60 nm, or 10 to 35 nm. The specific surface area of the silica particles (measured by the BET method) may be from 35 to 300 m²/g. Silica is typically used in an amount of from 10 to 150 parts by weight, or 30 to 130 parts by weight, or 50 to 130 parts by weight per 100 parts by weight of the total polymer.

Silica fillers can be used in combination with other fillers, including carbon black, carbon nanotubes, carbon-silica dual-phase-filler, graphene, graphite, clay, calcium carbonate, magnesium carbonate and combinations thereof.

Carbon black and silica may be added together, in which case the total amount of carbon black and silica is from 30 to 150 parts by weight or 50 to 150 parts by weight per 100 parts by weight of the total polymer.

Carbon-silica dual-phase filler is so called silica-coated carbon black made by coating silica on the surface of carbon black and commercially available under the trademark CRX2000, CRX2002 or CRX2006 (products of Cabot Co.). Carbon-silica dual-phase filler is added in the same amounts as described above with respect to silica.

### SILANE COUPLING AGENTS

In some embodiments, a silane coupling agent (used for compatibilization of polymer and fillers) can be added to a polymer composition of the invention when additionally containing one or more of silica, layered silicate (such as magadiite) and carbon-silica dual-phase filler. The typical amount of a silane coupling agent added is from about 1 to about 20 parts by weight and, in some embodiments, from about 5 to about 15 parts by weight for 100 parts by weight of the total amount of silica and/or carbon-silica dual-phase filler.

Silane coupling agents can be classified according to Fritz Röthemeyer, Franz Sommer: Kautschuk Technologie, (Carl Hanser Verlag 2006):
(A) bifunctionalized silanes, including Si230 ((EtO)₃Si(CH₂)₃Cl), Si225 ((EtO)₃SiCH=CH₂), Si263 ((EtO)₃Si(CH₂)₃SH), [(EtO)₃Si(CH₂)₃Sₓ(CH₂)₃Si(OEt)₃] with x = 3.75 (Si69), 2.35 (Si75) or 2.15 (Si266), Si264 ((EtO)₃Si-(CH₂)₃SCN) and Si363 ((EtO)Si((CH₂-CH₂-O)₅(CH₂)₁₂CH₃)₂(CH₂)₃SH)) (Evonic Industries AG); NXT (3-octanoylthio-1-propyltriethoxysilane), NXT-Z45, NXT-Z100 (Momentive Performance Materials Inc.); Xiameter® ofs-6030 silane (methacryloxypropyltrimethoxysilane), Xiameter® ofs-6300 silane ((MeO)₃SiCH=CH₂), and
(B) monofunctional silanes, including Si203 ((EtO)₃-Si-C₃H₇) and Si208 ((EtO)₃-Si-C₈H₁₇).

Further suitable examples of silane coupling agents are given in WO 2009/148932 and include bis-(3-hydroxy-dimethylsilyl-propyl)tetrasulfide, bis-(3-hydroxy-dimethylsilyl-propyl) disulfide, bis-(2-hydroxy-dimethylsilyl-ethyl) tetrasulfide, bis-(2-hydroxy-dimethylsilyl-ethyl)disulfide, 3-hydroxy-dimethylsilyl-propyl-N,N-dimethylthiocarbamoyl tetrasulfide and 3-hydroxy-dimethylsilyl-propylbenzothiazole tetrasulfide.

### VULCANIZING AGENTS (CROSSLINKING AGENTS)

Any crosslinking agent conventionally used in the manufacture of rubber products can be used in the invention, and a combination of two or more crosslinking agents may be used.

Sulfur, sulfur-containing compounds acting as sulfur donors, sulfur accelerator systems and peroxides are the most common crosslinking agents. Examples of sulfur-containing compounds acting as sulfur donors include dithiodimorpholine (DTDM), tetramethylthiuram disulfide (TMTD), tetraethylthiuram disulfide (TETD) and dipentamethylenethiuram tetrasulfide (DPTT). Examples of sulfur accelerators include amine derivatives, guanidine derivatives, aldehydeamine condensation products, thiazoles, thiuram sulfides, dithiocarbamates and thiophosphates. Examples of peroxides include di-tert.-butyl-peroxides, di-(tert.-butyl-peroxy-trimethyl-cyclohexane), di-(tert.-butyl-peroxy-isopropyl-)benzene, dichloro-benzoylperoxide, dicumylperoxides, tert.-butyl-cumyl-peroxide, dimethyl-di(tert.-butyl-peroxy)hexane, dimethyl-di(tert.-butyl-peroxy)hexine and butyl-di(tert.-butyl-peroxy)valerate (Rubber Handbook, SGF, The Swedish Institution of Rubber Technology 2000).

Further examples and additional information regarding crosslinking agents can be found in Kirk-Othmer, Encyclopedia of Chemical technology 3rd, Ed., (Wiley Interscience, N.Y. 1982), volume 20, pp. 365-468, (specifically "Vulcanizing Agents and Auxiliary Materials" pp. 390-402).

A crosslinking accelerator of the sulfene amide-type, guanidine-type or thiuram-type can be used together with a crosslinking agent as required. Other additives such as zinc white, crosslinking auxiliaries, aging preventives, processing adjuvants and the like may optionally be added. A crosslinking agent is typically added to the polymer composition in an amount of from 0.5 to 10 parts by weight or, in some embodiments, 1 to 6 parts by weight per 100 parts by weight of the total polymer. Examples of crosslinking accelerators and amount thereof added with respect to the total polymer are given in WO 2009/148932.

Sulfur accelerator systems may or may not contain zinc oxide. Zinc oxide is preferably used as a component of the sulfur accelerator system.

### VULCANIZED (CROSSLINKED) POLYMER COMPOSITION AND RUBBER ARTICLES

The crosslinked (vulcanized) polymer composition according to the seventh aspect of the invention is obtained by crosslinking (vulcanizing) a polymer composition of the invention, which comprises at least one crosslinking (vulcanizing) agent. Since the crosslinked elastomeric polymer compositions of the invention exhibit improved wear properties, they are well suited for use in manufacturing of tires, tire treads, as well as other industrial products such as belts, hoses, vibration dampers and footwear components.

The crosslinked polymer composition is the result of a reactive polymer-polymer crosslink-forming process which is performed on (i) a mixture of the polymer and at least one vulcanizing agent or (ii) the polymer composition comprising at least one vulcanizing agent. Therefore, the reactive process converts an essentially uncrosslinked polymer or an essentially uncrosslinked polymer composition, particularly a polymer or polymer composition each containing at least one vulcanizing agent, into a vulcanized (or crosslinked) polymer composition.

The crosslinked polymer composition of the invention exhibits reduced heat build up and reduced hysteresis properties. The composition is useful in preparing tire treads having reduced rolling resistance and heat build up while maintaining good wet grip, ice grip and abrasion resistance.

The invention also provides an article comprising at least one component formed from a crosslinked polymer composition of the invention. The article may be a tire, a tire tread, a tire side wall, an automotive part, a footwear component, a golf ball, a belt, a gasket, a seal or a hose.

For producing vehicle tires, the following further polymers are of particular interest for use in combination with the polymer of the invention: natural rubber; low cis polybutadiene (LCBR) comprising less than 20 percent by weight of 1,2-polybutadiene, emulsion SBR (ESBR) and solution SBR (SSBR) rubbers with a glass transition temperature above -50 °C; polybutadiene rubber with a high cis-1,4-unit content (>90%), such as obtained by using catalysts based on nickel, cobalt, titanium, vanadium, gadolinium or neodymium; and polybutadiene rubber with a vinyl content of 0 to 75%; and combinations thereof; polybutadiene rubber with a high trans-1,4-unit content (>75%) or SBR containing, for example, between 5 and 45 wt% styrene and having a high trans-1,4-polybutadiene content (>75%) in the polybutadiene fraction of the copolymer (each type of polymer, SBR or BR, may be obtained with one or more initiator compounds comprising earth alkaline metal compounds, such as described in U.S. Patent Nos. 6,693,160; 6,627,715; 6,489,415; 6,103,842; 5,753,579; 5,086,136; and 3,629,213, each of which is hereby incorporated herein by reference in its entirety; or by using catalysts based on cobalt, such as described in U.S. Patent Nos. 6310152; 5,834,573; 5,753,761; 5,448,002 and 5,089,574 and U.S. Patent Application Publication No. 2003/0065114, each of which is hereby incorporated herein by reference in its entirety; or by using catalysts based on vanadium, such as described in EP 1 367 069; JP 11301794 and U.S. 3,951,936, each of which is hereby incorporated herein by reference in its entirety; or by using catalysts based on neodymium, such as described in EP 0 964 008, EP 0 924 214 and U.S. Patent Nos. 6,184,168; 6,018,007; 4931376; 5,134,199 and 4,689,368, each of which is hereby incorporated herein by reference in its entirety).

The composition of the invention may also be used for producing high impact polystyrene (HIPS) and butadiene-modified acrylonitrile-butadiene-styrene copolymer (ABS) (see, for example, WO 2009/148932, incorporated herein by reference).

### DEFINITIONS

Unless specifically indicated otherwise, the expression "polymer" as used herein is intended to encompass both unmodified polymer and modified (i.e. chain end-modified and backbone-modified) polymer.

Alkyl groups as defined herein, whether as such or in association with other groups, such as alkylaryl, include both straight chain alkyl groups, such as methyl (Me), ethyl (Et), n-propyl (Pr), n-butyl (Bu), n-pentyl, n-hexyl, etc., branched alkyl groups, such as isopropyl, tert-butyl, etc., and cyclic alkyl groups, such as cyclohexyl. Propyl encompasses n-propyl and isopropyl. Butyl encompasses n-butyl, sec-butyl, isobutyl and tert-butyl.

Alkoxy groups as defined herein include methoxy (MeO), ethoxy (EtO), propoxy (PrO), butoxy (BuO), isopropoxy, isobutoxy, pentoxy, etc.

Aryl groups as defined herein include phenyl (Ph), biphenyl and other benzenoid compounds. Aryl groups preferably contain only one aromatic ring and most preferably contain a C₆ aromatic ring.

Alkylaryl groups as defined herein refer to a combination of one or more aryl groups bound to one or more alkyl groups, for example in the form of alkyl-aryl, aryl-alkyl, alkyl-aryl-alkyl and aryl-alkyl-aryl. Alkylaryl groups preferably contain only one aromatic ring and most preferably contain a C₆ aromatic ring.

The expression "independently selected from [list of chemical groups]" (emphasis added) in connection with the definition of plural chemical residues is intended to mean that each residue can be selected independently from the list of chemical groups. For instance, in a compound SiR₄, wherein each R is "independently selected from methyl, ethyl, propyl and butyl", all four groups may be either identical (such as in tetramethyl silane, Si(Me)₄) or fully or in part different (such as in trimethyl(propyl) silane).

Room temperature (RT or rt) refers to a temperature of 20 °C.
Other abbreviations: DMPS = dimethylphenylsilyl, TBS = tert-butyldimethylsilyl, TEA = triethylamine, THF = tetrahydrofuran, DCM = dichloromethane, MTBE = tert-butylmethylether.

### EXAMPLES

The following examples are provided in order to further illustrate the invention and are not to be construed as limiting the scope of the invention.

The vinyl group content in the polybutadiene fraction was determined by FT-IR measurements on a Nicolet AVATAR 360 FT-IR or a Nicolet iS 10 FT-IR, based on a calibration determination with a ¹H-NMR method as described below. The IR samples were prepared using a press.

Bonded styrene content: A calibration curve was prepared by FT-IR (Nicolet AVATAR 360 FT-IR or Nicolet iS 10 FT-IR). The IR samples were prepared using a press. For the IR determination of bonded styrene in styrene-butadiene copolymers, four bands are checked: a) band for trans-1,4-polybutadiene units at 966 cm⁻¹, b) band for cis-1,4-polybutadiene units at 730 cm⁻¹, c) band for 1,2-polybutadiene units at 910 cm⁻¹ and d) band for bonded styrene (styrene aromatic bond) at 700 cm⁻¹. The band heights are normalized according to the appropriate extinction coefficients and summarized to a total of 100%. The normalization is done via ¹H- and ¹³C-NMR (Avance 400 of Bruker Analytik GmbH, ¹H = 400 MHz; ¹³C = 100 MHz).

1D NMR spectra were collected on a BRUKER Avance 400 NMR spectrometer (BRUKER Corp.), using a "5 mm Dual detection probe." The field homogeneity was optimized by maximizing the deuterium lock signal. The samples were shimmed by optimizing the deuterium lock signal. The samples were run at room temperature (298 K). The following deuterated solvents were used: C₆D₆ (7.16 ppm for ¹H; 128.06 ppm for ¹³C-NMR), CDCl₃ (7.24 ppm for ¹H; 77.03 ppm for ¹³C-NMR), the signals of the remaining protons of deuterated solvents were each used as an internal reference.

For spectral processing, the BRUKER TopSpin software was used. Phasing, base line correction and spectral integration of the resulting spectra was done in the manual mode. For acquisition parameters see Table 1.

**Table 1 1D-NMR acquisition parameters using BRUKER standard pulse sequences**

| | ¹H-NMR | ¹³C-NMR |
|---|---|---|
| Observe frequency | 400.130 MHz | 100.613 MHz |
| Spectral width | 8278.146 Hz | 23980.814 Hz |
| BRUKER Pulse program | Zg30 | Zgpg30 |
| Pulse angle | 30° | 30° |
| Relaxation delay | 1.0 s | 2.0 s |
| Number of Data points for FT | 32 K | 32 K |
| Line broadening | 0.3 Hz | 1 Hz |
| Number of accumulated scans | 64 | > 1000 |

GPC-Method: SEC calibrated with narrow distributed polystyrene standard.

### Sample preparation:

a) About 9-11 mg dried polymer sample (moisture content < 0.6%) was dissolved in 10 mL tetrahydrofuran, using a brown vial of 10 mL size. The polymer was dissolved by shaking the vial for 20 min at 200 u/min.
b) Polymer solution was transferred into a 2 ml vial using a 0.45 µm disposable filter.
c) The 2 ml vial was placed on a sampler for GPC-analysis.
   Elution rate: 1.00 mL/min
   Injection volume: 100.00 µm

Polydispersity (Mw/Mn) was used as a measure for the width of molecular weight distribution. The values of Mw and Mn (weight average molecular weight (Mw) and number average molecular weight (Mn)) were measured by gel permeation chromatography on a SEC with refractive index detection (universal calibration). The measurement was performed in THF at 40°C. Instrument: Agilent Serie 1100 /1200; Module setup: Iso pump, autosampler, thermostat, UV - Detector, RI - Detector, Degasser; Columns PL Mixed B / HP Mixed B.

In each GPC-device, 3 columns were used in a connected mode. Length of each column: 300 mm; column type: 79911 GP- MXB, PIgel 10 µm MIXED-B GPC/SEC Columns, Fa. Agilent Technologies
GPC Standards: EasiCal PS-1 Polystyrene Standards, Spatula A + B
Styrene Standard Manufacturer: Polymer Laboratories, now an entity of Varian, Inc.

The Mp value corresponds to the (maximum peak) molecular weight measured at the peak with highest intensity.

Rubber compounds were prepared by combining the components listed below in Table 4 and Table 5 in a 380 ml Banbury mixer (Labstation 350S from Brabender GmbH & Co KG), following a two-stage mixing process. Stage 1 - mixed all components together, except the components of the vulcanization package, to form a stage 1 formulation. Stage 2 - components of vulcanization package were mixed into stage 1 formulation to form a stage 2 formulation.

Mooney viscosity was measured according to ASTM D 1646 (2004), with a preheating time of one minute and a rotor operation time of 4 minutes, at a temperature of 100°C [ML1+4(100 °C)], on a MV 2000E from Alpha Technologies UK. The rubber Mooney viscosity measurement is performed on dry (solvent free) raw polymer (unvulcanized rubber). The Mooney values of the raw polymers are listed in Table 3

Measurement of unvulcanized rheological properties was performed according to ASTM D 5289-95 (reapproved 2001), using a rotor-less shear rheometer (MDR 2000 E from Alpha Technologies UK) to measure Time to Cure (TC). The rheometer measurement was performed at a constant temperature of 160°C on an non-vulcanized second stage polymer formulation, according to Table 4 and Table 5. The amount of polymer sample is about 4.5 g. Sample shape and shape preparation are standardized and defined by the measurement device (MDR 2000 E from Alpha Technologies UK). The TC 50, TC 90 and TC 95 values are the respective times required to achieve 50%, 90% and 95% conversion of the vulcanization reaction. The torque is measured as a function of time of reaction. The vulcanization conversion is automatically calculated from the generated torque versus time curve. The TS 1 and TS 2 values are the respective times required to increase the torque by 1 dNm and 2 dNm above the respective torque minimum (ML) during vulcanization.

Tensile Strength, Elongation at Break and Modulus at 300% Elongation (Modulus 300) were measured according to ASTM D 412-98A (reapproved 2002), using a dumbbell die C test piece on a Zwick Z010. Standardized dumbbell die C test pieces of 2 mm thickness were used. The tensile strength measurement was performed at room temperature on a cured second stage polymer sample, prepared according to Table 4 and Table 5. Stage 2 formulations were vulcanized within 19-24 minutes at 160°C to TC 95 (95% vulcanization conversion) (see cure data in Table 6).

Heat build-up was measured according to ASTM D 623, method A, on a Doli 'Goodrich'-Flexometer. The heat build-up measurement was performed on a vulcanized second stage polymer samples according to Table 4 and Table 5. Stage 2 formulations were vulcanized at 160°C to TC 95 (95% vulcanization conversion) (see cure data in Table 6).

Rebound resilience was measured according to DIN 53512 at 0°C and 60°C on a Zwick 5109. The measurement was performed on a cured second stage polymer sample, prepared according to Table 4 and Table 5. Stage 2 formulations were vulcanized at 160°C to TC 95 (95% vulcanization conversion) plus 5 minutes extra time (see cure data in Table 6). The smaller the index at 0°C, the better the wet skid resistance (lower = better). The larger the index at 60°C, the lower the hysteresis loss and the lower the rolling resistance (higher = better).

DIN abrasion was measured according to DIN 53516 (1987-06-01). The larger the index, the lower the wear resistance (lower = better). The abrasion measurement was performed on a vulcanized, second stage polymer formulation according to Table 4 and Table 5.

Tan δ at 60°C and tan δ at 0°C as well as tan δ at -10°C measurements were performed on rectangular specimen, with a thickness of 2mm and a width of 10 mm, using a dynamic mechanical thermal spectrometer "Eplexor 150N," manufactured by Gabo Qualimeter Testanlagen GmbH (Germany), by applying a dynamic strain of 2%, at a frequency of 2 Hz, at the respective temperatures. The start length of the specimen, which is equal to the clamp distance of the equipment, is 10 mm. The smaller the index at a temperature of 60°C, the lower the rolling resistance (lower = better). Tan δ at 0°C and Tan δ at -10°C were measured using the same equipment and load conditions at 0°C and - 10°C. The larger the index at 0°C, the better the wet skid resistance and the larger the index at -10°C, the better the ice grip properties (higher = better). Tan δ at 60°C and tan δ at 0°C as well as tan δ at -10°C were determined (see Table 7). Stage 2 formulations were vulcanized at 160°C to TC 95 (95% vulcanization conversion) (see cure data in Table 6). The process leads to the formation of visually "bubble free," homogeneous cured rubber plates with a thickness of 2mm. A specimen was cutted out by using a specimen cut iron with respective width of 10 mm.

In general, the higher the values for Elongation at Break, Tensile Strength, Modulus 300, and tan δ at 0°C, Rebound Resilience at 60°C the better the sample performance; whereas the lower the tan δ at 60°C, Heat Build Up and Rebound Resilience at 0°C, the better the sample performance.

Initiator compound **I9** was made to provide the comparative polymer example 5, according to page 21, example 1 of WO 2011/082277. Initiator precursor compounds **C1** to **C11** and initiators **I1** to **I8** were made to provide examples of the subject invention. The structural formula and method of preparation are provided below.

### Synthesis of chain end modifying agent E1

E1 was synthesized according to the procedure described in WO 2009/148932.

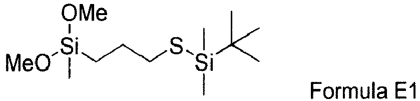

### Synthesis of compound C1

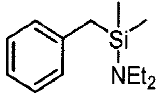

### Synthesis Method 1

Diethylamine (5.80 g, 79.6 mmol, 2.1 equivalents) was dissolved in cyclohexane (100 mL) and benzyldimethylchlorosilane (7.00 g, 37.9 mmol) was added dropwise. The mixture was stirred overnight. After filtration and removal of all volatiles under vacuum a yellow liquid was obtained (6.32 g, 75 % yield). A GC analysis revealed a purity of 97%.

### Synthesis Method 2

Chloro(diethylamino)dimethylsilane (9.33 g, 56.6 mmol) was dissolved in cyclohexane (150 mL) and benzylpotassium (7.36 g, 56.6 mmol) was added in portions so that the red colour of the benzylpotassium had disappeared before the next portion was added. The resulting mixture was stirred overnight and filtered. All volatiles were removed under reduced pressure and the residue was distilled fractionally to yield 8.90 g (71 %, boiling point 137°C/ 4 mbar) of a colorless liquid with a purity of 96 % determined by GC analysis.
¹H-NMR (400 MHz, 23°C, C₆D₆): δ = 7.15-7.12 (m, 2H, Aryl-H), 7.01-6.97 (m, 3H, Aryl-*H*), 2.66 (q, 4H, N(C*H*₂CH₃)₂), 2.03 (s, 2H, C*H*₂Si), 0.86 (t, 6H, N(CH₂C*H*₃)₂), 0.02 (s, 6H, Si(C*H*₃)₂) ppm; ¹³C-NMR (101 MHz, 23°C, C₆D₆) δ = 141.14 (Aryl-*C*), 129.01 (Aryl-*C*), 128.77 (Aryl-*C*), 124.5109 (Aryl-*C*), 40.89 (N*C*H₂), 28.35 (Si*C*H₂), 16.51 (NCH₂*C*H₃), -1.68 (Si*Me*₂) ppm.

### Synthesis of compound C2

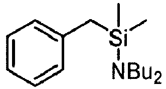

Benzyldimethylchlorosilane (7 g, 37.9 mmol) and diethylamine (4.38 g, 43.4 mmol, 1.2 equivalents) were dissolved in cyclohexane (150 mL). Dibutyamine (4.42 g, 34.3 mmol, 0.95 equivalents) was added slowly under vigorous stirring and the mixture was stirred overnight. After filtration and removal of all volatiles under reduced pressure, 7.39 g (70 %) of a colorless liquid were obtained. A GC analysis revealed a purity of 95%.
¹H-NMR (400 MHz, 23°C, C₆D₆): δ = 7.18-7.14 (m, 2H, Aryl-*H*), 7.03-7.00 (m, 3H, Aryl-*H*), 2.66 (t, 4H, N(C*H*₂CH₂CH₂CH₃)₂), 2.09 (s, 2H, C*H*₂Si), 1.37-1.33 (m, 4H, N(CH₂C*H*₂CH₂CH₃)₂), 1.17 (sext., 4H, N(CH₂CH₂C*H*₂CH₃)₂), 0.88 (t, 6H, N(CH₂CH₂CH₂C*H*₃)₂), 0.07 (s, 6H, Si(C*H*₃)₂) ppm; ¹³C-NMR (101 MHz, 23°C, C₆D₆) δ = 141.20 (Aryl-*C*), 129.05 (Aryl-*C*), 128.81 (Aryl-*C*), 124.61 (Aryl-*C*), 47.28 (N*C*H₂), 33.24 (NCH₂*C*H₂), 28.27 (Si*C*H₂), 21.04 (NCH₂CH₂*C*H₂), 14.77 (NCH₂CH₂CH₂*C*H₃), -1.52 (Si*Me*₂) ppm.

### Synthesis of compound C3

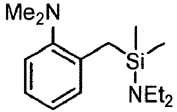

Chloro(diethylamino)dimethylsilane (9.28 g, 56.3 mmol) was dissolved in cyclohexane (100 mL) and N,N-dimethyl-o-toluidinepotassium (9.74 g, 56.2 mmol) was added in portions so that the red color of the alkylpotassium had disappeared before the next portion was added. The resulting mixture was stirred overnight and filtered. All volatiles were removed under reduced pressure and the residue was distilled fractionally to yield 2.20 g (15 %, boiling point 110-120°C/ 4 mbar) of a colorless liquid with a purity of 90 % determined by GC analysis.
¹H-NMR (400 MHz, 23°C, C₆D₆): δ = 7.11-6.95 (m, 4H, Aryl-*H*), 2.78 (q, 4H, N(C*H*₂CH₃)₂), 2.47 (s, 6H, N(C*H*₃)₂), 2.29 (s, 2H, C*H*₂Si), 0.94 (t, 6H, N(CH₂C*H*₃)₂), 0.10 (s, 6H, Si(C*H*₃)₂) ppm; ¹³C-NMR (101 MHz, 23°C, C₆D₆) δ = 152.68 (Aryl-*C*), 136.72 (Aryl-*C*), 130.69 (Aryl-*C*), 125.68 (Aryl-*C*), 124.21 (Aryl-C), 120.25 (Aryl-*C*), 45.17 (N*Me*₂), 40.98 (N*C*H₂), 23.21 (Si*C*H₂), 16.57 (NCH₂*C*H₃), -1.09 (Si*Me*₂) ppm.

### Synthesis of compound C4

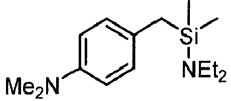

Chloro(diethylamino)dimethylsilane (9.28 g, 56.3 mmol) was dissolved in cyclohexane (100 mL) and N,N-dimethyl-p-toluidinepotassium (9.74 g, 56.2 mmol) was added in portions so that the red color of the alkylpotassium had disappeared before the next portion was added. The resulting mixture was stirred overnight and filtered. All volatiles were removed under reduced pressure and the residue was distilled fractionally to yield 4.90 g (33 %, boiling point 125-130°C/ 0.5 mbar) of a colorless liquid with a purity of 97 % determined by GC analysis.
¹H-NMR (400 MHz, 23°C, C₆D₆): δ = 7.02 (d, 2H, Aryl-*H*), 6.66 (d, 2H, Aryl-*H*), 2.74 (q, 4H, N(C*H*₂CH₃)₂), 2.57 (s, 6H, N(C*H*₃)₂), 2.08 (s, 2H, C*H*₂Si), 0.93 (t, 6H, N(CH₂C*H*₃)₂), 0.11 (s, 6H, Si(C*H*₃)₂) ppm; ¹³C-NMR (101 MHz, 23°C, C₆D₆) δ = 148.74 (Aryl-*C*), 129.63 (Aryl-*C*), 128.95 (Aryl-*C*), 114.02 (Aryl-C), 41.18 (N*Me*₂), 40.95 (N*C*H₂), 26.63 (Si*C*H₂), 16.59 (NCH₂*C*H₃), -1.54 (Si*Me*₂) ppm.

### Synthesis of compound C5

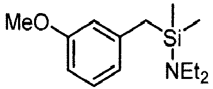

Magnesium granules (1.26 g, 52.5mmol) were suspended in diethylether (50 mL) and 3-methoxybenzylchlorid (7.83 g, 50.0 mmol) was added dropwise. Afterwards the mixture was refluxed for two hours and cooled to room temperature. The mixture was filtered and chloro(diethylamino)dimethylsilane (8.27 g, 50.0 mmol) was added. The resulting mixture was stirred overnight at room temperature. After filtration the solvent and all volatiles were removed under reduced pressure and the residue was distilled fractionally to yield a light yellow oil (7.11 g, 57 %). Boiling point 130°C / 6 mbar, purity 95 % (GC).
¹H-NMR (400 MHz, 23°C, C₆D₆): δ = 7.10 (t, 1H, Aryl-*H*), 6.73-6.60 (m, 3H, Aryl-*H*), 3.39 (s, 3H, OC*H*₃), 2.67 (q, 4H, N(C*H*₂CH₃)₂), 2.04 (s, 2H, C*H*₂Si), 0.87 (t, 6H, N(CH₂C*H*₃)₂), 0.05 (s, 6H, Si(C*H*₃)₂) ppm; ¹³C-NMR (101 MHz, 23°C, C₆D₆) δ = 160.63 (Aryl-*C*), 142.78 (Aryl-*C*), 129.66 (Aryl-*C*), 121.61 (Aryl-*C*), 115.07 (Aryl-C), 109.89 (Aryl-C), 54.96 (O*Me*), 40.85 (N*C*H₂), 28.46 (Si*C*H₂), 16.50 (NCH₂*C*H₃), -1.62 (Si*Me*₂) ppm.

### Synthesis of compound C6

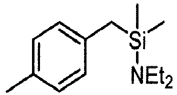

Chloro(diethylamino)dimethylsilane (8.25 g, 50.0 mmol) was dissolved in cyclohexane (50 mL) and p-methylbenzylpotassium (7.21 g, 50.0 mmol) was added in portions so that the red color of the alkylpotassium had disappeared before the next portion was added. The resulting mixture was stirred overnight, filtered and washed two times with 30 mL cyclohexane. All volatiles were removed under reduced pressure and the residue was distilled fractionally to yield 5.69 g (47 %, boiling point 98-101°C/ 4 mbar) of a colorless liquid with a purity of 93 % determined by GC analysis.
¹H-NMR (400 MHz, 23°C, C₆D₆): δ = 7.01-6.93 (m, 4H, Aryl-*H*), 2.69 (q, 4H, N(C*H*₂CH₃)₂), 2.16 (s, 3H, C*H*₃-Aryl), 2.04 (s, 2H, C*H*₂Si), 0.89 (t, 6H, N(CH₂C*H*₃)₂), 0.05 (s, 6H, Si(C*H*₃)₂) ppm; ¹³C-NMR (101 MHz, 23°C, C₆D₆) δ = 137.89 (Aryl-*C*), 133.53 (Aryl-*C*), 129.53 (Aryl-*C*), 128.98 (Aryl-*C*), 40.89 (N*C*H₂), 27.69 (Si*C*H₂), 21.38 (*C*H₃-Aryl), 16.53 (NCH₂*C*H₃), -1.65 (Si*Me*₂) ppm.

### Synthesis of Intermediate Int

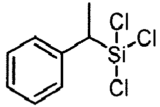

Styrene (5.00g, 48 mmol, 1.0 equiv.) was added to a solution of trichloromethylsilane (6.48 g, 48 mmol, 1.0 equiv.) in THF (1.25 ml) in a pressure tube. Then palladium(II)chloride (4.5 mg, 0.025 mmol, 0.05%) and diphenyltertbutylphosphane (25 mg, 0.10 mmol, 0.2%) were added and the tube was sealed. The reaction mixture was stirred at 80°C for 6 h. Intermediate **Int** was used for further transformations without purification.
Reaction progress was monitored by GC-aliquots after quench with methanol.
Regioselectivity >99:1 (GC)
GC-MS (70eV, EI in %) = 226 (M⁺, 63), 194 (2), 167 (10), 121 (Si(OMe)₃⁺, 100), 105 (PhCHCH₃⁺, 24), 91 (C₇H₇⁺, 100).

### Synthesis of compound C7

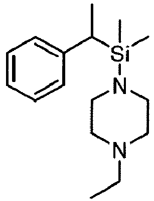

Intermediate **Int** (3.25 g, 13.6 mmol, 1.0 equiv.) was dissolved in cyclohexane (30 ml). Triethylamine (1.51 g, 15.9 mmol, 1.1 equiv.) was added followed by ethylpiperazine (1.55 g, 13.6 mmol, 1.0 equiv.) and the mixture was stirred for 3 days. Afterwards the solids were filtered off and TMEDA (0.158 g, 1.36 mmol, 0.1 equiv.) was added to the remaining solution. Then methyllithium (1.6 M solution in ether, 17.1 ml, 27.4 mmol, 2.02 equiv.) was added and the reaction mixture was stirred for a further 16 h at 25°C. After filtration the solvent was removed. Title compound **C7** was received (1.90 g, 6.87 mmol, 51%) after distillation at 0.6 mbar (bp = 132°C).
¹H-NMR (400 MHz, 23°C, CDCl₃): δ = 7.23-7.20 (m, 2H, Aryl-*H*), 7.08-7.09 (m, 3H, Aryl-*H*), 2.83-2.81 (m, 4H, N(C*H*₂CH₂)₂N), 2.34 (q, 2H, *J* = 7.2 Hz, NC*H*₂CH₃), 2.24-2.19 (m, 4H, N(CH₂C*H*₂)₂N), 2.20 (q, 1 H, *J* = 7.0 Hz, PhC*H*CH₃), 1.34 (d, 3H, *J* = 7.2 Hz, PhCHC*H*₃), 1.05 (t, 3H, *J* = 7.2 Hz, NCH₂C*H*₃), 0.02 (s, 3H, Si(C*H*₃)₂), -0.03 (s, 3H, Si(C*H*₃)₂) ppm; ¹³C-NMR (101 MHz, 23°C, CDCl₃) δ = 145.95 (Aryl-*C*), 127.91 (2 Aryl-*C*H), 127.28 (2 Aryl-*C*H), 124.10 (Aryl-*C*H), 54.82 (2 N*C*H₂), 53.02 (N*C*H₂), 45.67 (2 N*C*H₂), 31.03 (Ph*C*HCH₃), 15.00 (PhCH*C*H₃),11.68 (NCH₂*C*H₃), -4.52 (Si*Me*₂), -4.67 (Si*Me*₂) ppm.

### Synthesis of compound C8

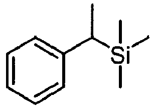

Intermediate **Int** (2.3 g, 9.6 mmol, 1.0 equiv.) was dissolved in THF (3 ml). Methylmagnesiumchloride (3M solution in THF, 11.2 ml, 33.6 mmol, 3.5 equiv.) was added and the mixture was stirred for 3 h. After filtration the solvent was removed. Title compound **C8** was received (0.80 g, 4.49 mmol, 47%) after distillation at 4 mbar (bp = 60°C).
¹H-NMR (400 MHz, 23°C, C₆D₆): δ 7.19-7.15 (m, 2H, Aryl-*H*), 7.04-7.02 (m, 1H, Aryl-*H*), 6.98-6.96 (m, 2H, Aryl-*H*), 1.98 (q, 1H, *J* = 7.6 Hz, PhC*H*CH₃), 1.25 (d, 3H, *J* = 7.6 Hz, PhCHC*H*₃), -0.10 (s, 9H, Si(C*H*₃)₃) ppm; ¹³C-NMR (101 MHz, 23°C, C₆D₆) δ = 145.97 (Aryl-*C*), 128.66 (2 Aryl-*C*H), 127.32 (2 Aryl-*C*H), 124.73 (Aryl-*C*H), 29.90 (Ph*C*HCH₃), 14.92 (PhCH*C*H₃), -3.29 (Si*Me*₃) ppm; GC-MS (70eV, EI in %) = 178 (M⁺,16), 163 (M⁺-CH₃, 4), 135 (12), 121 (2), 105 (PhCHCH₃⁺, 5), 91 (C₇H₇⁺, 1), 73 (Me₃Si⁺, 100).

### Synthesis of compound C9

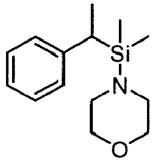

Intermediate **Int** (9.73 g, 40.6 mmol, 1.0 equiv.) was dissolved in cyclohexane (100 ml). Triethylamine (4.11 g, 40.6 mmol, 1.0 equiv.) was added followed by a dropwise addition of morpholine (3.54 g, 40.6 mmol, 1.0 equiv.) and the mixture was stirred for 3 h. Afterwards the solids were filtered off. Then methyllithium (1.6 M solution in ether, 52.0 ml, 83.2 mmol, 2.05 equiv.) was added and the reaction mixture was stirred for a further 16 h at 25°C. After filtration the solvent was removed. Title compound **C9** was received (6.00 g, 24.1 mmol, 59%) after distillation at 5 mbar (bp = 131-134°C).
¹H-NMR (400 MHz, 23°C, CDCl₃): δ = 7.31-7.21 (m, 2H, Aryl-*H*), 7.17-7.11 (m, 3H, Aryl-*H*), 3.57-3.49 (m, 4H, O(C*H*₂CH₂)₂N), 2.85-2.76 (m, 4H, O(CH₂C*H*₂)₂N), 2.28 (q, 1H, *J* = 7.6 Hz, PhC*H*CH₃), 1.41 (d, 3H, *J* = 7.6 Hz, PhCHC*H*₃), 0.09 (s, 3H, Si(C*H*₃)₂), 0.06 (s, 3H, Si(C*H*₃)₂) ppm; ¹³C-NMR (101 MHz, 23°C, CDCl₃) δ = 145.66 (Aryl-*C*), 127.96 (2 Aryl-*C*H), 127.22 (2 Aryl-*C*H), 124.25 (Aryl-*C*H), 68.52 (2 O*C*H₂), 45.95 (2 N*C*H₂), 30.81 (Ph*C*HCH₃), 14.99 (PhCH*C*H₃), -4.75 (2 Si*Me*₂) ppm; GC-MS (70 eV, EI in %) =249 (M⁺, 6), 144 (SiMe₂(morph)⁺, 100), 121 (5), 100 (25), 75 (25).

### Synthesis of compound C10

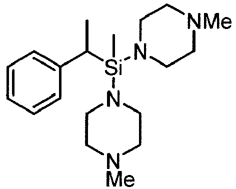

Intermediate **Int** (3.84 g, 16.0 mmol, 1.0 equiv.) was dissolved in cyclohexane (25 ml). Triethylamine (3.25 g, 32.1 mmol, 2.0 equiv.) was added followed by a dropwise addition of 4-methylpiperazine (3.21 g, 32.1 mmol, 2.0 equiv.) and the mixture was stirred for 2 h. Afterwards the solids were filtered off. Then methylmagnesiumchloride (3 M solution in THF, 5.9 ml, 17.6 mmol, 1.1 equiv.) was added and the reaction mixture was stirred for a further 16 h at 25°C. After filtration the solvent was removed. Title compound **C10** was received (2.54 g, 7.33 mmol, 46%) after distillation at 0.6 mbar (bp = 176°C).
¹H-NMR (400 MHz, 23°C, CDCl₃): δ = 7.24-7.20 (m, 2H, Aryl-*H*), 7.09-7.06 (m, 3H, Aryl-*H*), 3.06-3.00 (m, 8H, N(C*H*₂CH₂)₂N), 2.83-2.79 (m, 8H, N(CH₂C*H*₂)₂N), 2.37 (q, 1 H, *J* = 7.6 Hz, PhC*H*CH₃), 2.26 (s, 3H, NC*H*₃), 2.20 (s, 3H, NC*H*₃), 1.35 (d, 3H, *J* = 7.6 Hz, PhCHC*H*₃), -0.08 (s, 3H, Si(C*H*₃)) ppm; ¹³C-NMR (101 MHz, 23°C, CDCl₃) δ = 145.52 (Aryl-*C*), 128.00 (2 Aryl-*C*H), 127.87 (2 Aryl-*C*H), 124.42 (Aryl-*C*H), 56.78 (2 N*C*H₂), 56.75 (2 N*C*H₂), 46.80 (N*C*H₃), 46.77 (N*C*H₃), 45.51 (2 N*C*H₂), 44.98 (2 N*C*H₂), 28.45 (Ph*C*HCH₃), 15.64 (PhCH*C*H₃), -5.99 (Si*C*H₃) ppm.

### Synthesis of compound C11

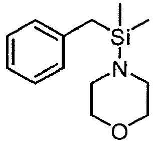

Benzyldimethylchlorosilane (7.00 g, 37.9 mmol) and triethylamine (4.38 g, 43.9 mmol, 1.2 equivalents) were dissolved in cyclohexane (150 mL) and morpholine (3.30 g, 37.8 mmol) was added dropwise. The mixture was stirred overnight. After filtration and removal of all volatiles under vacuum a yellow liquid was obtained (6.26 g, 70 % yield). A GC analysis revealed a purity of 99%.
¹H-NMR (400 MHz, 23°C, C₆D₆): δ = 7.17-7.13 (m, 2H, Aryl-*H*), 7.03-6.94 (m, 3H, Aryl-*H*), 3.38 (t, 4H, N(CH₂C*H*₂)₂O), 2.56 (t, 4H, N(C*H*₂CH₂)₂O) 1.93 (s, 2H, C*H*₂Si), -0.08 (s, 6H, Si(C*H*₃)₂) ppm; ¹³C-NMR (101 MHz, 23°C, C₆D₆) δ = 140.64 (Aryl-*C*), 129.01 (Aryl-C), 128.86 (Aryl-*C*), 124.77 (Aryl-*C*), 68.92 (N(CH₂*C*H₂)₂O), 46.33 (N(*C*H₂CH₂)₂O), 27.21 (Si*C*H₂), -2.74 (Si*Me*₂) ppm.

### Synthesis of compound C12

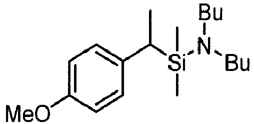

4-Methoxybenzyltrichlorosilane (2.81 g, 10.1 mmol) was dissolved in cyclohexane (50 ml). Triethylamine (1.02 g, 10.1 mmol, 1.0 equiv.) was added followed by a dropwise addition of dibutylamine (1.31 g, 10.1 mmol, 1.0 equiv.) and the mixture was stirred for 2.5 h. Afterwards the solids were filtered off. Then methyllithium (1.6 M solution in Et₂O, 12.7 ml, 20.3 mmol, 2.02 equiv.) was added and the reaction mixture was stirred for a further 16 h at 25°C. After filtration the solvent was removed. Title compound C12 was received as colorless oil (1.76 g, 5.47 mmol, 54%) after distillation at 0.15 mbar (bp = 113-119°C).
¹H-NMR (400 MHz, 23°C, C₆D₆): 7.00-6.96 (m, 2H, Aryl-H), 6.82-6.77 (m, 2H, Aryl-H), 3.38 (s, 3H, OMe), 2.66 (t, J = 7.6 Hz, 4H, N(C*H*₂-R)₂), 2.18 (q, 1 H, J = 7.6 Hz, PhC*H*CH₃), 1.39-1.31 (m, 4H, 2 C*H*₂-C*H*₂), 1.36 (d, J = 7.6 Hz, 3H, PhCHC*H*₃), 1.17 (sext, J = 7.4 Hz, 4H, 2 R-C*H*₂-CH₃), 0.88 (t, J = 7.2 Hz, 6H, 2 R-C*H*₃), 0.09 (s, 3H, Si(C*H*₃), 0.04 (s, 3H, Si(C*H*₃) ppm; ¹³C-NMR (101 MHz, 23°C, C₆D₆) δ = 157.54 (Aryl-*C*), 138.79 (Aryl-*C*), 128.42 (2 Aryl-*C*H), 113.91 (2 Aryl-*C*H), 54.76 (O*C*H₃), 47.37 (2 N*C*H₂), 33.14 (2 NCH₂*C*H₂), 30.29 (Ph*C*HCH₃), 20.74 (2 NCH₂CH₂*C*H₂), 15.94 (PhCH*C*H₃), 14.42 (2 N-R-*C*H₃), -3.23 (Si*C*H₃), -3.81 (Si*C*H₃) ppm.

### Synthesis of compound C13

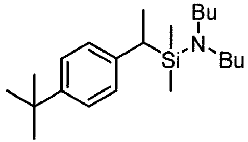

4-tert-Butylbenzyltrichlorosilane (2.97 g, 10.1 mmol) was dissolved in cyclohexane (50 ml). Triethylamine (1.02 g, 10.1 mmol, 1.0 equiv.) was added followed by a dropwise addition of dibutylamine (1.31 g, 10.1 mmol, 1.0 equiv.) and the mixture was stirred for 2.5 h. Afterwards the solids were filtered off. Then methyllithium (1.6 M solution in Et₂O, 12.7 ml, 20.3 mmol, 2.02 equiv.) was added and the reaction mixture was stirred for a further 16 h at 25°C. After filtration the solvent was removed. Title compound C13 was received (2.27 g, 6.53 mmol, 65%) after distillation at 0.4 mbar (bp = 136-144°C) as a slightly yellow oil.
¹H-NMR (400 MHz, 23°C, C₆D₆): 7.27-7.24 (m, 2H, Aryl-*H*), 7.08-7.05 (m, 2H, Aryl-*H*), 2.64 (t, J = 7.6 Hz, 4H, N(C*H*₂-R)₂), 2.23 (q, J = 7.6 Hz, 1 H, PhC*H*CH₃), 1.40-1.29 (m, 4H, 2 C*H*₂-CH₂), 1.38 (d, J = 7.6 Hz, 3H, PhCHC*H*₃), 1.27 (s, 9H, C(C*H*₃)₃), 1.16 (sext, J = 7.4 Hz, 4H, 2 R-C*H*₂-CH₃), 0.87 (t, J = 7.4 Hz, 6H, 2 R-C*H*₃), 0.10 (s, 3H, Si(C*H*₃), 0.05 (s, 3H, Si(C*H*₃) ppm; ¹³C-NMR (101 MHz, 23°C, C₆D₆) δ = 147.00 (Aryl-*C*), 143.29 (Aryl-*C*), 127.46 (2 Aryl-*C*H), 125.13 (2 Aryl-CH), 47.33 (2 N*C*H₂), 34.31 (Alkyl-C), 33.09 (2 NCH₂*C*H₂), 31.70 (3 *C*H₃), 30.91 (Ph*C*HCH₃), 20.75 (2 NCH₂CH₂*C*H₂), 15.75 (PhCH*C*H₃), 14.43 (2 N-R-*C*H₃), -3.29 (Si*C*H₃), -3.64 (Si*C*H₃) ppm.

### Synthesis of compound C14

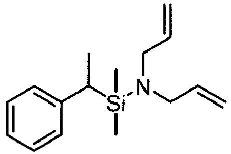

Intermediate **Int** (4.82 g, 20.1 mmol, 1.0 equiv.) was dissolved in cyclohexane (100 ml). Triethylamine (2.04 g, 20.1 mmol, 1.0 equiv.) was added followed by a dropwise addition of diallylamine (1.95 g, 20.1 mmol, 1.0 equiv.) and the mixture was stirred for 2.5 h. Afterwards the solids were filtered off. Then methyllithium (1.6 M solution in Et₂O, 25.4 ml, 40.6 mmol, 2.02 equiv.) was added and the reaction mixture was stirred for a further 16 h at 25°C. After 16 h an additional amount of 0.6 ml, 0.05 equiv. methyllithium was added. Afterwards the solids were filtered off and the solvent was removed. Title compound C14 was received (1.98 g, 7.63 mmol, 38%) after distillation at 10 mbar as a colorless oil (bp = 140°C).
¹H-NMR (400 MHz, 23°C, C₆D₆): 7.13-7.09 (m, 2H, Aryl-*H*), 6.99-6.95 (m, 3H, Aryl-*H*), 5.51 (ddt, J = 16.8 Hz, J = 10.4 Hz, J = 6.0 Hz, 2H, allyl-C*H*), 4.95 (dtd, J = 16.8 Hz, J = 2.0 Hz, J = 1.2 Hz, 2H, allylC*HH*), 4.94 (dt, J = 10.4 Hz, J = 1.2 Hz, 2H, allylC*HH*), 3.18-3.15 /m, 4H, allyl-CH2), 2.08 (q, 1 H, J = 7.6 Hz, PhCHCH3), 1.25 (d, 3H, J = 7.6 Hz, PhCHCH3), -0.03 (s, 3H, Si(CH3), -0.08 (s, 3H, Si(CH3)) ppm; 13C-NMR (101 MHz, 23°C, C6DC6) δ = 146.08 (Aryl-C), 138.25 (2 Allyl-CH), 128.34 (2 Aryl-CH), 127.69 (2 Aryl-CH), 124.71 (Aryl-CH), 115.34 (2 Allyl-CH2), 49.56 (2 Allyl-CH2), 31.42 (PhCHCH3), 15.44 (PhCHCH3), -3.59 (SiCH3), -4.09 (SiCH3) ppm.

### Synthesis of initiator compound I1

The compound **C1** (2.21 g, 10.0 mmol) was dissolved in cyclohexane (5 mL) and N,N,N',N'-tetramethylethylenediamine (1.16 g, 10.0 mmol) and n-butyllithium (10.0 mmol, 3.13 g, 20wt% solution in cyclohexane) were added. The color of the solution immediately turned red indicating the formation of **I1**. The solution was stirred for one day and was analyzed by ¹H-NMR.
¹H-NMR (400 MHz, 23°C, C₆D₆): δ = 6.90 (t, 2H, Aryl-*H*), 6.66 (br s, 2H, Aryl-*H*), 6.17 (t s, 1H, Aryl-*H*), 3.13 (t, 4H, N(C*H*₂CH₃)₂), 1.88 (s, 1H, LiC*H*Si), 1.70 (s, 12H, *Me*₂N(CH₂)₂N*Me*₂, corresponds to coordinated TMEDA), 1.61 (s, 4H, Me₂N(C*H*₂)₂NMe₂, corresponds to coordinated TMEDA), 1.15 (t, 6H, N(CH₂C*H*₃)₂), 0.29 (s, 6H, Si(C*H*₃)₂) ppm.

### Synthesis of initiator compound I2

The compound **C2** (1.81 g, 6.5 mmol) was dissolved in cyclohexane (30 g) and N,N,N',N'-tetramethylethylenediamine (0.76 g, 6.5 mmol) and n-butyllithium (6.90 mmol, 2.19 g, 20wt% solution in cyclohexane) were added. The color of the solution immediately turned red indicating the formation of 12. The solution was stirred for one days and was analyzed by ¹H-NMR.
¹H-NMR (400 MHz, 23°C, C₆D₆): δ = 6.84 (t, 2H, Aryl-*H*), 6.60 (br s, 2H, Aryl-*H*), 6.11 (t s, 1H, Aryl-*H*), 3.03 (t, 4H, N(C*H*₂CH₃)₂), 1.85 (s, 1H, LiC*H*Si), 1.74 (s, 12H, *Me*₂N(CH₂)₂N*Me*₂, corresponds to coordinated TMEDA), 1.68 (s, 4H, Me₂N(C*H*₂)₂NMe₂, corresponds to coordinated TMEDA), 1.60-1.52 (m, 4H, N(CH₂C*H*₂CH₂CH₃)₂), 1.32 (sext., 4H, N(CH₂CH₂C*H*₂CH₃)₂), 0.94 (t, 6H, N(CH₂CH₂CH₂C*H*₃)₂), 0.23 (s, 6H, Si(C*H*₃)₂) ppm;

### Synthesis of initiator compound I3

The compound **C3** (2.20 g, 8.30 mmol) was dissolved in cyclohexane (30 g) and N,N,N',N'-tetramethylethylenediamine (0.71 g, 8.3 mmol) and n-butyllithium (8.80 mmol, 2.00 g, 20wt% solution in cyclohexane) were added. The color of the solution immediately turned red indicating the formation of 13. The solution was stirred for one days and was analyzed by ¹H-NMR.
¹H-NMR (400 MHz, 23°C, C₆D₆): δ = 7.38-7.36 (m, 1H, Aryl-*H*), 7.02-7.00 (m, 1H, Aryl-*H*), 6.72-6.69 (m, 1H, Aryl-*H*), 6.32-6.28 (m, 1H, Aryl-*H*), 3.27 (q, 4H, N(C*H*₂CH₃)₂), 2.41 (s, 6H, N(C*H*₃)₂), 2.28 (s, 1H, LiC*H*Si), 1.26 (t, 6H, N(CH₂C*H*₃)₂), 0.42 (s, 6H, Si(C*H*₃)₂) ppm.

### Synthesis of initiator compounds I4-I8

Initiators **I4-I8** were prepared by applying the procedure of the synthesis of **I1** on the corresponding substances **C4-C8.**

### Synthesis of I9 (comparative example)

Bis(dimethylamino)phenylmethylsilane (1.93 g, 9.26 mmol), triethylamine (3.63 g, 35.9 mmol) and s-BuLi (5.32 g, 10.1 mmol, solution in cyclohexane with a concentration of 1.90 mol/kg) were stirred together for 2.5 h at 50°C according to Example 1 in WO2011/082277A1.

### Copolymerization of 1,3-butadiene and styrene (polymers 1-14)

The co-polymerizations were performed in a double wall, 5 liter steel reactor, which was first purged with nitrogen, before the addition of organic solvent, monomers, polar coordinator compound, initiator compound or other components. The polymerization reactor was tempered to 40°C, unless stated otherwise. The following components were then added in the following order: cyclohexane solvent (1950-2500 g); butadiene monomer, styrene monomer, TMEDA, and the mixture was stirred for one hour, followed by titration with n-BuLi to remove traces of moisture or other impurities. The polymerization initiator compound (n-BuLi, 11-18) was added into the polymerization reactor to initiate the polymerization reaction. The polymerization was performed for 80 minutes, not allowing the polymerization temperature to exceed 60°C. Afterwards, 2.3% of the total butadiene monomer amount was added and stirred for 5 minutes, followed by the optionally addition of chain-end modifier E1. After 20 minutes the polymerization was terminated by the addition of methanol (equimolar amount based on initiator). To the polymer solution, 0.25 wt% IRGANOX 1520 was added as a stabilizer. This mixture was stirred for 15 minutes. The resulting polymer solution was than stripped with steam for one hour to remove solvent and other volatiles, and dried in an oven at 70°C for 30 minutes and then additionally at room temperature until the moisture content is < 0.6 %. The amounts for the initiator, chain-end modifier, TMEDA and the monomers are summarized in Table 2 and the analytical data for the resulting polymers P1-P6 are summarized in Table 3.

### Copolymerization of 1,3-butadiene and styrene (polymer 15)

The co-polymerizations were performed in a double wall, 10 liter steel reactor, which was first purged with nitrogen, before the addition of organic solvent, monomers, polar coordinator compound, initiator compound or other components. The polymerization reactor was tempered to 40°C, unless stated otherwise. The following components were then added in the following order: cyclohexane solvent (4600 grams); butadiene monomer, styrene monomer, TMEDA, and the mixture was stirred for one hour, followed by titration with n-BuLi to remove traces of moisture or other impurities. n-BuLi was added into the polymerization reactor to initiate the polymerization reaction. The polymerization was performed for 80 minutes, not allowing the polymerization temperature to exceed 60°C. Afterwards, 0.5% of the total butadiene monomer amount was added and after stirring for 1 minute SnCl4 (0.085 g, 0.325 mmol) was added. The mixture was stirred for 20 minutes. Subsequently, 1.8% of the total butadiene monomer amount was added and stirred for 5 minutes, followed by the addition of chain-end modifier. After 20 minutes the polymerization was terminated by the addition of methanol (equimolar amount based on initiator). To the polymer solution, 0.25 wt% IRGANOX 1520 was added as a stabilizer. This mixture was stirred for 15 minutes. The resulting polymer solution was than stripped with steam for one hour to remove solvent and other volatiles, and dried in an oven at 70°C for 30 minutes and then additionally at room temperature until the moisture content is < 0.6 %. The amounts for the initiator, SnCl4, chain-end modifier, TMEDA and the monomers are summarized in Table 2 and the analytical data for the resulting polymers P1-P6 are summarized in Table 3.

**Table 2: Composition of Examples - amounts of reagents for polymerization**

| Polymer | Initiator [mmol] | Chain-end modifier E1 [mmol] | Butadiene [mmol] | Styrene [mmol] | TMEDA [mmol] |
|---|---|---|---|---|---|
| 1 | (I1) 1.838 | - | 6.528 | 0.900 | 1.919 |
| 2 | (I2) 0.876 | - | 3.136 | 0.432 | 0.872 |
| 3 | (I1) 1.836 | 2.183 | 6.328 | 0.893 | 1.869 |
| 4 | (I2) 1.033 | 1.250 | 3.624 | 0.507 | 1.072 |
| 5 (CEx) | (I9) 1.410 | - | 4.923 | 0.683 | 2.741 |
| 6 (Ref) | (n-BuLi) 2.112 | - | 6.545 | 0.934 | 3.763 |
| 7 | (I1) 1.822 | 2.239 | 6.325 | 0.888 | 1.815 |
| 8 | (I5) 2.309 | 2.198 | 6.284 | 0.883 | 1.828 |
| 9 | (I3) 1.830 | 2.210 | 6.326 | 0.883 | 1.853 |
| 10 | (I6) 1.877 | 2.172 | 6.233 | 0.881 | 1.768 |
| 11 | (I4) 1.818 | 2.165 | 6.275 | 0.882 | 1.802 |
| 12 | (I4) 1.823 | 2.230 | 6.490 | 0.893 | 1.823 |
| 13 | (I7) 1.824 | 2.179 | 6.315 | 0.893 | 1.802 |
| 14 | (I8) 1.826 | 2.181 | 6.326 | 0.894 | 1.828 |
| 15 | (n-BuLi) 4.318 | 3.726 | 13.00 | 1.800 | 8.718 |

**Table 3: Polymer data from SEC**

| Example | Mp [g/mol] | Mn [g/mol] | Mw [g/mol] | Styrene content [wt%] | Vinyl content [wt%] | Mooney viscosity [MU] |
|---|---|---|---|---|---|---|
| 1 | 350786 | 307761 | 432889 | 21.3 | 61.3 | 69.6 |
| 2 | 355088 | 253458 | 325579 | n.m. | n.m. | n.m. |
| 3 | 341013 | 304036 | 387032 | 21.04 | 61.48 | 63.5 |
| 4 | 382599 | 294657 | 366491 | n.m. | n.m. | 87.7 |
| 5 (CEx) | 389387 | 331670 | 412116 | 21.3 | 60.0 | 76.8 |
| 6 (Ref) | 374290 | 332686 | 382235 | 21.3 | 61.5 | 70.6 |
| 7 | 361664 | 261571 | 356798 | 21.3 | 61.3 | 53.3 |
| 8 | 388167 | 340337 | 421741 | 19.6 | 63.9 | 70.4 |
| 9 | 362652 | 277592 | 388461 | 21.3 | 60.6 | 59.4 |
| 10 | 398781 | 323497 | 395654 | 21.6 | 60.7 | 72.7 |
| 11 | 414478 | 302664 | 396889 | 21.1 | 62.1 | 64.2 |
| 12 | 370128 | 320880 | 449907 | 22.0 | 59.2 | 79.9 |
| 13 | 355530 | 311137 | 385094 | 21.6 | 60.2 | 71.4 |
| 14 | 380188 | 331956 | 399184 | 22.0 | 60.9 | 86.2 |
| 15 (Ref) | 303555 | 307347 | 431917 | 20.9 | 62.8 | 60.2 |

**Table 4 Polymer Compositions for compounds 2A-6A, 7B, 10B, 13B-15B, 7C-9C, 11C, 12C, 15C**

| Components | | Amount (phr) *^{a}* |
|---|---|---|
| 1^{st} mixing stage | | |
| Elastomeric polymer Example (solution styrene butadiene copolymer) | Polymer 2-15 | 80.0 |
| High cis 1,4-polybutadiene | Buna cis 132-Schkopau *^{b}* | 20.0 |
| Precipitated silica | Ultrasil 7000GR *^{c}* | 80.0 |
| Silane | Si 75 *^{c,d}* | 6.9 |
| Stearic acid *^{e}* | | 1.0 |
| Stabilizer system | Antilux 654 *^{f}* | 1.5 |
| | Dusantox 6PPD *^{g}* | 2.0 |
| Zinc oxide *^{h}* | | 2.5 |
| Softener (Oil) | TDAE *ⁱ* | 20.0 |
| 2^{nd} mixing stage | | |
| Sulfur ^{,*j*} | | 1.4 |
| TBBS *^{k}* | | 1.5 |
| DPG *^{l}* | | 1.5 |

| | | |
|---|---|---|
| *a* Based on sum weight of the styrene butadiene copolymer and high cis 1,4-polybutadiene *b* Styron Deutschland GmbH *c* Evonic Industries AG *d* Bis(triethoxysilylpropyl)disulfan, sulfur equivalents per molecule: 2.35 e Cognis GmbH *f* Light & ozone protective wax, Rhein Chemie Rheinau GmbH *g* N-(1,3-dimethylbutyl)-N'-phenyl-1,4-benzenediamine, Duslo, a.s. *h* Grillo-Zinkoxid GmbH *i* VivaTec 500, Hansen & Rosenthal KG *j* Solvay AG *k* N-tert-Butyl-2-benzothiazyl-sulfenamide; Rhein Chemie Rheinau GmbH l Diphenylguanidine, Vulkacit D, Lanxess AG | | |

**Table 5 Polymer Composition for compounds 7D, 8D, 12D, 15D**

| Components | | Amount (phr) *^{a}* |
|---|---|---|
| 1^{st} mixing stage | | |
| Elastomeric polymer Example (solution styrene butadiene copolymer) | Polymer 7, 8, 12, 15 | 100.0 |
| Carbon Black *^{b}* | IRB 8 | 50.0 |
| Stearic acid *^{c}* | | 1.5 |
| Zinc oxide *^{d}* | | 3.0 |
| Softener (Oil) | TDAE*^{e}* | 15.0 |
| 2^{nd} mixing stage | | |
| Sulfur *^{e}* | | 1.75 |
| TBBS *^{f}* | | 1.0 |

| | | |
|---|---|---|
| *a* Based on sum weight of the styrene butadiene copolymer *b* IRB 8, international ref. carbon black, Sid Richardson *c* Cognis GmbH *d* Grillo-Zinkoxid GmbH *e* Solvay AG *f* N-tert-Butyl-2-benzothiazyl-sulfenamide; Rhein Chemie Rheinau GmbH | | |

**Table 6 Vulcanization Process Data & Polymer Composition Vulcanizate Property**

| Example | Polymer Mooney [MU] | TS 1 [min] | TS 2 [min] | TC 50 [min] | TC 90 [min] | TC 95 [min] | Heat build-up [°C] | DIN Abrasion 0.5 kg load [mm³] |
|---|---|---|---|---|---|---|---|---|
| 2A | n.m. | 1.0 | 2.9 | 6.4 | 15.0 | 19.6 | 114.9 | 140 |
| 3A | 63.5 | 0.9 | 2.6 | 6.4 | 14.9 | 19.6 | 107.4 | 152 |
| 4A | 87.7 | 0.7 | 2.3 | 5.9 | 15.0 | 20.1 | 99.5 | 133 |
| 5A | 76.8 | 0.8 | 2.5 | 6.1 | 14.3 | 19.0 | 117.7 | 134 |
| 6A | 70.6 | 0.9 | 2.7 | 6.2 | 14.4 | 19.0 | 118.2 | 143 |
| 7B | 53.3 | 0.9 | 3.2 | 7.8 | 16.5 | 21.1 | 101.7 | 126 |
| 10B | 72.7 | 0.1 | 0.1 | 7.0 | 15.7 | 20.2 | 100.5 | 129 |
| 13B | 71.4 | 0.7 | 2.5 | 7.6 | 16.2 | 20.7 | 104.2 | 126 |
| 14B | 86.2 | 0.7 | 2.3 | 7.4 | 15.7 | 20.1 | 106.2 | 129 |
| 15B | 60.2 | 1.5 | 4.7 | 9.1 | 18.2 | 22.5 | 115.1 | 132 |
| 7C | 53.3 | 1.0 | 3.0 | 7.0 | 16.3 | 20.9 | 103.5 | 123 |
| 8C | 81.0 | 0.9 | 2.6 | 6.5 | 15.8 | 20.5 | 102.2 | 133 |
| 9C | 65.9 | 0.0 | 0.0 | 6.9 | 15.1 | 19.6 | 100.9 | 132 |
| 11C | 71.3 | 0.8 | 2.5 | 6.6 | 15.5 | 20.0 | 101.1 | 129 |
| 12C | 79.9 | 0.4 | 1.3 | 6.4 | 15.8 | 20.5 | 102.1 | 129 |
| 15C | 60.2 | 1.4 | 3.6 | 7.3 | 16.3 | 20.8 | 113.5 | 139 |
| 7D | 53.3 | 6.6 | 8.8 | 11.8 | 20.0 | 23.4 | 97.6 | 174 |
| 8D | 81.0 | 5.9 | 8.2 | 11.4 | 19.9 | 23.4 | 93.9 | 190 |
| 12D | 79.9 | 6.2 | 8.3 | 11.1 | 19.1 | 22.6 | 95.1 | 172 |
| 15D | 60.2 | 6.4 | 8.7 | 12.0 | 20.8 | 24.1 | 100.1 | 188 |

**Table 7 Polymer Composition Vulcanizate Properties**

| Example | Tensile Strength [MPa] | Elongation at Break [%] | Modulus 300 [MPa] | Rebound Resilience at 0°C [%] | Rebound Resilience at 60°C [%] | Tan δ at -10°C | Tan δ at 0°C | Tan δ at 60°C |
|---|---|---|---|---|---|---|---|---|
| 2A | 18.4 | 414 | 11.6 | 15.6 | 61.2 | 0.568 | 0.356 | 0.115 |
| 3A | 20.6 | 404 | 12.4 | 14.8 | 63.4 | 0.591 | 0.365 | 0.100 |
| 4A | 19.8 | 384 | 13.0 | 15.6 | 66.8 | 0.571 | 0.342 | 0.083 |
| 5A | 19.2 | 443 | 10.8 | 15.1 | 56.8 | 0.562 | 0.402 | 0.152 |
| 6A | 20.3 | 453 | 11.4 | 14.4 | 57.1 | 0.581 | 0.388 | 0.138 |
| 7B | 18.8 | 382 | 12.3 | 14.5 | 65.5 | 0.623 | 0.375 | 0.091 |
| 10B | 19.9 | 390 | 12.7 | 14.5 | 65.4 | 0.645 | 0.406 | 0.094 |
| 13B | 20.3 | 420 | 11.3 | 14.7 | 65.5 | 0.591 | 0.356 | 0.091 |
| 14B | 20.9 | 457 | 10.2 | 13.9 | 62.4 | 0.610 | 0.390 | 0.106 |
| 15B | 19.1 | 414 | 11.5 | 14.2 | 61.4 | 0.632 | 0.404 | 0.126 |
| 7C | 19.5 | 378 | 13.5 | 14.9 | 65.0 | 0.615 | 0.375 | 0.099 |
| 8C | 19.7 | 387 | 12.5 | 14.4 | 63.8 | 0.622 | 0.376 | 0.096 |
| 9C | 20.9 | 425 | 11.6 | 14.7 | 65.3 | 0.619 | 0.372 | 0.098 |
| 11C | 18.7 | 368 | 13.2 | 13.9 | 64.6 | 0.644 | 0.394 | 0.097 |
| 12C | 20.9 | 402 | 12.6 | 15.4 | 66.1 | 0.583 | 0.354 | 0.096 |
| 15C | 19.9 | 410 | 12.2 | 14.1 | 62.7 | 0.626 | 0.396 | 0.127 |
| 7D | 19.2 | 458 | 10.7 | 5.8 | 63.8 | 1.228 | 0.629 | 0.126 |
| 8D | 20.7 | 465 | 11.4 | 5.6 | 66.2 | 1.248 | 0.612 | 0.112 |
| 12D | 22.1 | 489 | 11.3 | 6.5 | 65.0 | 1.133 | 0.553 | 0.112 |
| 15D | 19.0 | 457 | 10.7 | 5.2 | 61.9 | 1.330 | 0.690 | 0.146 |

One important application of the present invention is the production of vulcanized (crosslinked) elastomeric polymer compositions having lower heat build up, lower tan δ at 60°C values and higher rebound resilience at 60°C values, while tan δ at 0°C values, tan δ at -10°C values and DIN abrasion values are in the same range or at least not significantly deteriorated.

In order to demonstrate the formation of the metalated benzylsilane polymerization initiator compounds from the corresponding precursor compounds, exemplary the reaction of the benzylsilane precursor compounds C1-C3 with n-butyl lithium in the presence of TMEDA were performed and the structure of the resulting metalated benzylsilane polymerization initiator compounds 11-13 were confirmed by ¹H-NMR spectroscopy (as described above).

It was surprisingly found that polymer compositions of the invention when used for the preparation of crosslinked (reinforced silica or carbon black) polymer compositions (see for example 2A in Table 6 or Table 7) have a relatively increased rebound resilience at 60°C and a relatively decreased tan δ at 60°C and heat build up when compared with crosslinked rubber compositions made of a polymer composition not made according to the invention (see for example 6A in Table 6 or Table 7). In addition, the performance characteristics, particularly rolling resistance measured as tan delta @ 60°C, heat build-up or rebound resilience at 60°C of the crosslinked inventive polymer compositions are improved when compared with modified polymers not according to the invention (e.g example 2A vs. 5A in Table 6 or Table 7).

A polymer composition of the invention may be converted into a crosslinked polymer composition by first stage mixing (mixing step in which silica or carbon black filler and other ingredients are added to polymer) and second stage mixing (mixing step in which the crosslinking agent is added to the polymer composition) according to Table 4 or Table 5, followed by crosslinking at 160°C for about 20 min (TC 95) as described herein. The polymer compositions and crosslinked polymer compositions (as listed in Table 4 or Table 5), prepared under identical conditions at the same day by the identical operator, are identified with a capital letter, e.g. A or B. The polymer contained in the crosslinked polymer composition is identified by the polymer number, e.g. 1, 2, or 3. As a result, there are crosslinked polymer composition series, such as 2A, 3A or 4A which can be directly compared with each other.

Tan δ at 0°C and at -10°C values correlate with the wet and ice grip property respectively, with a higher value corresponding to a higher grip performance. Heat build-up, rebound resilience at 60°C and tan δ at 60°C values of crosslinked rubber compositions with silica and carbon black fillers according to the invention are significantly improved in comparison with crosslinked polymer compositions not according to the invention.

To demonstrate the benefit of the invention in more detail, some further examples are given. The polymer of example 2 (Table 2 and Table 3) was made by the polymerization of 1,3-butadiene and styrene with initiator compound **I2.** Polymer 2 was used to prepare an inventive silica-filler containing polymer composition 2A (Table 6 or Table 7). As a reference polymer of example 6 (Table 6 or Table 7) was prepared from the unfunctionalized organolithium compound n-butyl lithium and as a competitive sample the polymer of example 5 (Table 6 or Table 7) was prepared by the polymerization of **I9** which was obtained by the procedure described in WO 2011/082277, as stated there **I9** is a metalated aminosilane. Composition 2A has significantly lower tan δ at 60°C and heat build up values and a higher rebound resilience at 60°C, when compared with the non-inventive polymer reference composition 6A and the competitive composition 5A. Furthermore it was found that the alpha-omega functionalization of a styrene-butadiene rubber, whereas the alpha modification was obtained by the use of an inventive metalated benzylsilane, further improves the hysteresis properties as demonstrated by the polymer compositions 3A and 4A containing the alpha-omega functionalized polymer examples 3 and 4 respectively. Carbon black-filled compositions containing alpha-omega modified polymers (composition 7D, 8D and 12D) according to the invention exhibit lower tan δ at 60°C and heat build up values and a higher rebound resilience at 60°C when compared with omega-modified polymers not according to the invention (Table 6 and Table 7). Furthermore, the substitution of the benzyl group with polar substituents such as OMe or NMe₂ as demonstrated in the polymer examples 8 and 12, lead to better hysteresis properties compared to unsubstituted benzyl groups (polymer example 7).

## Claims

1. A compound represented by the following Formula 2: 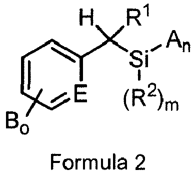 wherein
R¹ is selected from hydrogen, (C₁-C₈) alkyl and (C₆-C₁₈) aryl;
R² is selected from hydrogen, (C₁-C₁₈) alkyl, (C₆-C₁₈) aryl and (C₇-C₁₈) alkylaryl;
A is independently selected from amines having the following structural formulas: 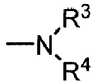
wherein R³ and R⁴ are independently selected from (C₂-C₁₈) alkyl, allyl, (C₆-C₁₈) aryl and (C₇-C₁₈) alkylaryl; and 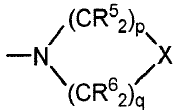
wherein R⁵ and R⁶ are independently selected from H and (C₁-C₄) alkyl; X is selected from a single bond, -N(R⁷)-, -O- and -S-, wherein R⁷ is selected from (C₁-C₈) alkyl and (C₆-C₁₈) aryl; and p and q are each independently an integer selected from 1, 2, 3 and 4;
B is independently selected from -OR⁸, -NR⁹₂, -SR¹⁰, -SiR¹¹R¹²R¹³ and -R¹⁴, wherein R⁸, R⁹, R¹⁰, R¹¹, R¹², R¹³ and R¹⁴ are independently selected from (C₁-C₁₀) alkyl;
E is =N- or =C(R¹⁵)-, wherein R¹⁵ is selected from H, (C₁-C₁₀) alkyl, -OR¹⁶, -NR¹⁷₂, -SR¹⁸, and -SiR¹⁹R²⁰R²¹, wherein R¹⁶, R¹⁷, R¹⁸, R¹⁹, R²⁰ and R²¹ are independently selected from (C₁-C₁₀) alkyl;
n is an integer selected from 1, 2 and 3, m is an integer selected from 0, 1, and 2 and m + n = 3; and
o is an integer selected from 0, 1, 2 and 3.

2. The compound according to claim 1, wherein
R¹ is selected from hydrogen and (C₁-C₈) alkyl;
R² is selected from (C₁-C₁₈) alkyl, (C₆-C₁₈) aryl and (C₇-C₁₈) alkylaryl; and
X is a single bond or -N(R⁷)-, wherein R⁷ is selected from (C₁-C₈) alkyl and (C₆-C₁₈) aryl.

3. The compound according to claim 2, wherein
o is an integer selected from 1, 2 and 3 and at least one B is selected from -OR⁸, -NR⁹₂, -SR¹⁰ and -SiR¹¹R¹²R¹³, wherein R⁸, R⁹, R¹⁰, R¹¹, R¹² and R¹³ are independently selected from (C₁-C-₁₀) alkyl.

4. A polymerization initiator represented by the following Formula 1: 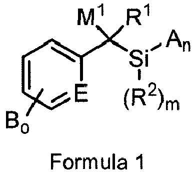 wherein
M¹ is selected from lithium, sodium and potassium;
R¹ is selected from hydrogen, (C₁-C₈) alkyl and (C₆-C₁₈) aryl;
R² is selected from hydrogen, (C₁-C₁₈) alkyl, (C₆-C₁₈) aryl and (C₇-C₁₈) alkylaryl;
A is independently selected from amines having the following structural formulas: 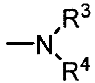
wherein R³ and R⁴ are independently selected from (C₂-C₁₈) alkyl, allyl, (C₆-C₁₈) aryl and (C₇-C₁₈) alkylaryl; and 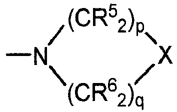
wherein R⁵ and R⁶ are independently selected from H and (C₁-C₄) alkyl; X is selected from a single bond, -N(R⁷)-, -O- and -S-, wherein R⁷ is selected from (C₁-C₈) alkyl and (C₆-C₁₈) aryl; and p and q are each independently an integer selected from 1, 2, 3 and 4;
B is independently selected from -OR⁸, -NR⁹₂, -SR¹⁰, -SiR¹¹R¹²R¹³ and -R¹⁴, wherein R⁸, R⁹, R¹⁰, R¹¹, R¹², R¹³ and R¹⁴ are independently selected from (C₁-C₁₀) alkyl;
E is =N- or =C(R¹⁵)-, wherein R¹⁵ is selected from H, (C₁-C₁₀) alkyl, -OR¹⁶, -NR¹⁷₂, -SR¹⁸, and -SiR¹⁹R²⁰R²¹, wherein R¹⁶, R¹⁷, R¹⁸, R¹⁹, R²⁰ and R²¹ are independently selected from (C₁-C₁₀)alkyl;
n is an integer selected from 1, 2 and 3, m is an integer selected from 0, 1, and 2 and m + n = 3; and
o is an integer selected from 0, 1, 2 and 3.

5. The polymerization initiator according to claim 4, wherein
R¹ is selected from hydrogen and (C₁-C₈) alkyl;
R² is selected from (C₁-C₁₈) alkyl, (C₆-C₁₈) aryl and (C₇-C₁₈) alkylaryl; and
X is a single bond or -N(R⁷)-, wherein R⁷ is selected from (C₁-C₈) alkyl and (C₆-C₁₈) aryl.

6. The polymerization initiator according to claim 5, wherein
M¹ is lithium; and
o is an integer selected from 1, 2 and 3 and at least one B is selected from -OR⁸, -NR⁹₂, -SR¹⁰ and -SiR¹¹R¹²R¹³, wherein R⁸, R⁹, R¹⁰, R¹¹, R¹² and R¹³ are independently selected from (C₁-C₁₀) alkyl.

7. A method of making the polymerization initiator of Formula 1 as defined in any one of claims 4 to 6, comprising the step of reacting a compound of Formula 2 as defined in claims 1 to 3 with a compound of the following Formula 3:
R¹⁶M¹ Formula 3
wherein M¹ is selected from lithium, sodium and potassium and R¹⁶ is selected from (C₁-C₁₈) alkyl, phenyl and benzyl.

8. A method of making an elastomeric polymer, comprising the step of polymerizing one or more polymerizable conjugated diene compounds and optionally one or more polymerizable aromatic vinyl compounds in the presence of a polymerization initiator of the following Formula 4: 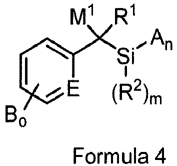 wherein
M¹ is selected from lithium, sodium and potassium;
R¹ is selected from hydrogen, (C₁-C₈) alkyl and (C₆-C₁₈) aryl;
R² is selected from hydrogen, (C₁-C₁₈) alkyl, (C₆-C₁₈) aryl and (C₇-C₁₈) alkylaryl;
A is independently selected from amines having the following structural formulas: 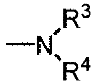
wherein R³ and R⁴ are independently selected from (C₁-C₁₈) alkyl, allyl, (C₆-C₁₈) aryl and (C₇-C₁₈) alkylaryl; and 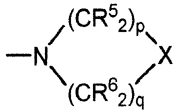
wherein R⁵ and R⁶ are independently selected from H and (C₁-C₄) alkyl; X is selected from a single bond, -N(R⁷)-, -O- and -S-, wherein R⁷ is selected from (C₁-C₈) alkyl and (C₆-C₁₈) aryl; and p and q are each independently an integer selected from 1, 2, 3 and 4;
B is independently selected from -OR⁸, -NR⁹₂, -SR¹⁰, -SiR¹¹R¹²R¹³ and R¹⁴, wherein R⁸, R⁹, R¹⁰, R¹¹, R¹², R¹³ and R¹⁴ are independently selected from (C₁-C₁₀) alkyl;
E is =N- or =C(R¹⁵)-, wherein R¹⁵ is selected from H, (C₁-C₁₀) alkyl, -OR¹⁶, -NR¹⁷₂, -SR¹⁸, and -SiR¹⁹R²⁰R²¹, wherein R¹⁶, R¹⁷, R¹⁸, R¹⁹, R²⁰ and R²¹ are independently selected from (C₁-C₁₀)alkyl;
m and n are each an integer independently selected from 0, 1, 2 and 3 and m + n = 3; and
o is an integer selected from 0, 1, 2 and 3.

9. The method according to claim 8, which is carried out in the presence of one or more chain end-modifying agents.

10. An elastomeric polymer obtainable by the method of claim 8 or 9.

11. A polymer composition comprising the elastomeric polymer as defined in claim 10 and one or more further components selected from (i) components which are added to or formed as a result of the method which is used for making said polymer and (ii) components which remain after solvent removal from the method used for making said polymer.

12. The polymer composition according to claim 11 comprising one or more extender oils.

13. The polymer composition according to claim 11 or 12, further comprising one or more fillers.

14. The polymer composition according to any one of claims 11 to 13, wherein the one or more fillers are selected from silica and carbon black.

15. The polymer composition according to any one of claims 11 to 14, further comprising one or more vulcanizing agents.

16. A vulcanized polymer composition which is obtainable by vulcanizing the polymer composition as defined in claim 15.

17. A method of making a vulcanized polymer composition, comprising the step of vulcanizing the polymer composition as defined in claim 15.

18. An article comprising at least one component formed from the vulcanized polymer composition as defined in claim 16.

19. The article according to claim 18, which is selected from a tire, a tire tread, a tire side wall, an automotive part, a footwear component, a golf ball, a belt, a gasket, a seal and a hose.

## Amended claims

### Amended claims in accordance with Rule 137(2) EPC.

1. A compound represented by the following Formula 2: 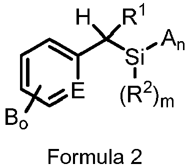 wherein
R¹ is selected from(C₁-C₈) alkyl and (C₆-C₁₈) aryl;
R² is selected from hydrogen, (C₁-C₁₈) alkyl, (C₆-C₁₈) aryl and (C₇-C₁₈) alkylaryl; A is independently selected from amines having the following structural formulas: 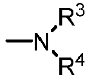 wherein R³ and R⁴ are independently selected from (C₂-C₁₈) alkyl, allyl, (C₆-C₁₈) aryl and (C₇-C₁₈) alkylaryl; and 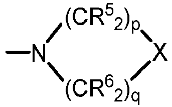 wherein R⁵ and R⁶ are independently selected from H and (C₁-C₄) alkyl; X is selected from a single bond, -N(R⁷)-, -O- and -S-, wherein R⁷ is selected from (C₁-C₈) alkyl and (C₆-C₁₈) aryl; and p and q are each independently an integer selected from 1, 2, 3 and 4;
B is independently selected from -OR⁸, -NR⁹₂, -SR¹⁰, -SiR¹¹R¹²R¹³ and -R¹⁴, wherein R⁸, R⁹, R¹⁰, R¹¹, R¹², R¹³ and R¹⁴ are independently selected from (C₁-C₁₀) alkyl;
E is =N- or =C(R¹⁵)-, wherein R¹⁵ is selected from H, (C₁-C₁₀) alkyl, -OR¹⁶, -NR¹⁷₂, -SR¹⁸, and -SiR¹⁹R²⁰R²¹, wherein R¹⁶, R¹⁷, R¹⁸, R¹⁹, R²⁰ and R²¹ are independently selected from (C₁-C₁₀) alkyl;
n is an integer selected from 1, 2 and 3, m is an integer selected from 0, 1, and 2 and m + n = 3; and
o is an integer selected from 0, 1, 2 and 3.

2. The compound according to claim 1, wherein
R¹ is selected from (C₁-C₈) alkyl;
R² is selected from (C₁-C₁₈) alkyl, (C₆-C₁₈) aryl and (C₇-C₁₈) alkylaryl; and
X is a single bond or -N(R⁷)-, wherein R⁷ is selected from (C₁-C₈) alkyl and (C₆-C₁₈) aryl.

3. The compound according to claim 2, wherein
o is an integer selected from 1, 2 and 3 and at least one B is selected from -OR⁸, -NR⁹₂, -SR¹⁰ and -SiR¹¹R¹²R¹³, wherein R⁸, R⁹, R¹⁰, R¹¹, R¹² and R¹³ are independently selected from (C₁-C₁₀) alkyl.

4. A polymerization initiator represented by the following Formula 1: 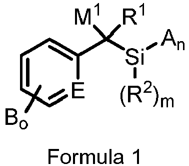 wherein
M¹ is selected from lithium, sodium and potassium;
R¹ is selected from hydrogen, (C₁-C₈) alkyl and (C₆-C₁₈) aryl;
R² is selected from hydrogen, (C₁-C₁₈) alkyl, (C₆-C₁₈) aryl and (C₇-C₁₈) alkylaryl; A is independently selected from amines having the following structural formulas: 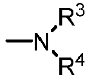 wherein R³ and R⁴ are independently selected from (C₂-C₁₈) alkyl, allyl, (C₆-C₁₈) aryl and (C₇-C₁₈) alkylaryl; and 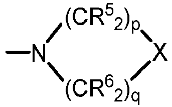 wherein R⁵ and R⁶ are independently selected from H and (C₁-C₄) alkyl; X is selected from a single bond, -N(R⁷)-, -O- and -S-, wherein R⁷ is selected from (C₁-C₈) alkyl and (C₆-C₁₈) aryl; and p and q are each independently an integer selected from 1, 2, 3 and 4;
B is independently selected from -OR⁸, -NR⁹₂, -SR¹⁰, -SiR¹¹R¹²R¹³ and -R¹⁴, wherein R⁸, R⁹, R¹⁰, R¹¹, R¹², R¹³ and R¹⁴ are independently selected from (C₁-C₁₀) alkyl;
E is =N- or =C(R¹⁵)-, wherein R¹⁵ is selected from H, (C₁-C₁₀) alkyl, -OR¹⁶, -NR¹⁷₂, -SR¹⁸, and -SiR¹⁹R²⁰R²¹, wherein R¹⁶, R¹⁷, R¹⁸, R¹⁹, R²⁰ and R²¹ are independently selected from (C₁-C₁₀) alkyl;
n is an integer selected from 1, 2 and 3, m is an integer selected from 0, 1, and 2 and m + n = 3; and
o is an integer selected from 0, 1, 2 and 3.

5. The polymerization initiator according to claim 4, wherein
R¹ is selected from hydrogen and (C₁-C₈) alkyl;
R² is selected from (C₁-C₁₈) alkyl, (C₆-C₁₈) aryl and (C₇-C₁₈) alkylaryl; and
X is a single bond or -N(R⁷)-, wherein R⁷ is selected from (C₁-C₈) alkyl and (C₆-C₁₈) aryl.

6. The polymerization initiator according to claim 5, wherein
M¹ is lithium; and
o is an integer selected from 1, 2 and 3 and at least one B is selected from -OR⁸, -NR⁹₂, -SR¹⁰ and -SiR¹¹R¹²R¹³, wherein R⁸, R⁹, R¹⁰, R¹¹, R¹² and R¹³ are independently selected from (C₁-C₁₀) alkyl.

7. A method of making the polymerization initiator of Formula 1 as defined in any one of claims 4 to 6, comprising the step of reacting a compound of Formula 2 as defined in claims 1 to 3 with a compound of the following Formula 3:
R¹⁶M¹ Formula 3
wherein M¹ is selected from lithium, sodium and potassium and R¹⁶ is selected from (C₁-C₁₈) alkyl, phenyl and benzyl.

8. A method of making an elastomeric polymer, comprising the step of polymerizing one or more polymerizable conjugated diene compounds and optionally one or more polymerizable aromatic vinyl compounds in the presence of a polymerization initiator of the following Formula 4: 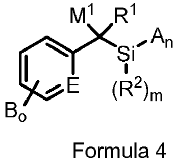 wherein
M¹ is selected from lithium, sodium and potassium;
R¹ is selected from hydrogen, (C₁-C₈) alkyl and (C₆-C₁₈) aryl;
R² is selected from hydrogen, (C₁-C₁₈) alkyl, (C₆-C₁₈) aryl and (C₇-C₁₈) alkylaryl; A is independently selected from amines having the following structural formulas: 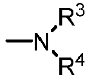 wherein R³ and R⁴ are independently selected from (C₁-C₁₈) alkyl, allyl, (C₆-C₁₈) aryl and (C₇-C₁₈) alkylaryl; and 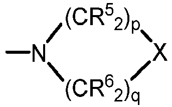 wherein R⁵ and R⁶ are independently selected from H and (C₁-C₄) alkyl; X is selected from a single bond, -N(R⁷)-, -O- and -S-, wherein R⁷ is selected from (C₁-C₈) alkyl and (C₆-C₁₈) aryl; and p and q are each independently an integer selected from 1, 2, 3 and 4;
B is independently selected from -OR⁸, -NR⁹₂, -SR¹⁰, -SiR¹¹R¹²R¹³ and R¹⁴, wherein R⁸, R⁹, R¹⁰, R¹¹, R¹², R¹³ and R¹⁴ are independently selected from (C₁-C₁₀) alkyl;
E is =N- or =C(R¹⁵)-, wherein R¹⁵ is selected from H, (C₁-C₁₀) alkyl, -OR¹⁶, -NR¹⁷₂, -SR¹⁸, and -SiR¹⁹R²⁰R²¹, wherein R¹⁶, R¹⁷, R¹⁸, R¹⁹, R²⁰ and R²¹ are independently selected from (C₁-C₁₀) alkyl;
m and n are each an integer independently selected from 0, 1, 2 and 3 and m + n = 3; and
o is an integer selected from 0, 1, 2 and 3.

9. The method according to claim 8, which is carried out in the presence of one or more chain end-modifying agents.

10. An elastomeric polymer obtainable by the method of claim 8 or 9.

11. A polymer composition comprising the elastomeric polymer as defined in claim 10 and one or more further components selected from (i) components which are added to or formed as a result of the method which is used for making said polymer and (ii) components which remain after solvent removal from the method used for making said polymer.

12. The polymer composition according to claim 11 comprising one or more extender oils.

13. The polymer composition according to claim 11 or 12, further comprising one or more fillers.

14. The polymer composition according to any one of claims 11 to 13, wherein the one or more fillers are selected from silica and carbon black.

15. The polymer composition according to any one of claims 11 to 14, further comprising one or more vulcanizing agents.

16. A vulcanized polymer composition which is obtainable by vulcanizing the polymer composition as defined in claim 15.

17. A method of making a vulcanized polymer composition, comprising the step of vulcanizing the polymer composition as defined in claim 15.

18. An article comprising at least one component formed from the vulcanized polymer composition as defined in claim 16.

19. The article according to claim 18, which is selected from a tire, a tire tread, a tire side wall, an automotive part, a footwear component, a golf ball, a belt, a gasket, a seal and a hose.
